# EUROPÄISCHE PATENTSCHRIFT

(11) **EP 2 864 848 B1**
(45) Veröffentlichungstag und Bekanntmachung des Hinweises auf die Patenterteilung: **01.02.2017**
(21) Anmeldenummer: 13762996.0
(22) Anmeldetag: 26.06.2013
(51) Int. Cl.: G05B 19/048, G05B 19/05, G06F 9/54, G06F 21/74

(54) **VORRICHTUNG UND VERFAHREN FÜR EINE SICHERHEITSKRITISCHE ANWENDUNG**
APPARATUS AND METHOD FOR A SECURITY-CRITICAL APPLICATION
DISPOSITIF ET PROCÉDÉ POUR UNE UTILISATION CRITIQUE POUR LA SÉCURITÉ

(30) Priorität: 26.06.2012 DE 102012012521
(43) Veröffentlichungstag der Anmeldung: 29.04.2015
(73) Patentinhaber: Inter Control Hermann Köhler Elektrik GmbH & Co. KG, 90411 Nürnberg (DE)
(72) Erfinder: HOLLER, Alexander, 90518 Altdorf bei Nürnberg (DE); KAISER, Hans-Dieter, 91077 Dormitz (DE); PFISTER, Werner, 91233 Neunkirchen am Sand (DE); RIEVE, Jörn, 23867 Sülfeld (DE); EMMERLING, Hans-Jürgen, 91177 Thalmässing (DE)
(74) Vertreter: Stippl, Hubert
(86) Internationale Anmeldenummer: PCT/EP2013/063334
(87) Internationale Veröffentlichungsnummer: WO 2014/001370

(56) Entgegenhaltungen:
- WO-A1-2009/095812
- WO-A2-01/75602
- DE-A1-102008 019 040

## Beschreibung

Die Erfindung betrifft eine Vorrichtung und ein Verfahren zum parallelen und unabhängigen Betrieb eines normalen und eines sicheren Programms bei sicherheitskritischen Anwendungen, insbesondere in einer Maschinenumgebung.

Im Bereich von frei programmierbaren elektronischen Steuerungen ist es üblich, dass die Steuerungen durch Konfiguration multifunktionaler Ein- und Ausgänge angepasst werden, z.B. für den Einsatz in mobilen Arbeitsmaschinen und speziell in Bezug auf kundenspezifische Aufgaben, die von solchen Maschinen erfüllt werden sollen. Hierzu werden spezifische Anwendungsprogramme (AWP) von den Herstellern von Arbeitsmaschinen auf Basis eines Programmiersystems erstellt, was z.B. die Programmerstellung, einen Programmtest, eine Programmübersetzung und/oder das Hochladen des Programms in die Steuerung umfasst. Seitens der Steuerung ist dabei in vielen Fällen ein Laufzeitsystem (LZS) implementiert, in dessen Umfeld das mit dem Programmiersystem erzeugte und in die Steuerung geladene AWP gestartet und betrieben werden kann. Das LZS regelt die Kommunikation zwischen einem Computer und einem Steuerungssystem.

Um Sicherheitsanforderungen zu erfüllen, müssen die AWP zertifiziert werden, bevor sie als funktional sicher eingestuft werden können und bei entsprechenden Anwendungen in den Arbeitsmaschinen eingesetzt werden dürfen. Ist eine programmtechnische Änderung an einem AWP erforderlich, z.B. weil die auszuführenden Arbeiten in der Abfolge oder Dauer oder Geschwindigkeit abgeändert werden sollen, ist nach erfolgter programmtechnischer Änderung meist eine erneute Zertifizierung erforderlich, selbst bei minimalen Änderungen. Dies führt dazu, dass Arbeitsabläufe oder Funktionsweisen nicht immer verbessert werden, selbst wenn bekannt ist, auf welche Weise eine Verbesserung erzielt werden könnte. Je sicherer ein AWP sein muss, desto schwieriger ist es daher für einen Betreiber oder Hersteller einer Maschine, überhaupt irgendwelche Änderungen vorzunehmen, ohne dass gleich eine neue Zertifizierung erforderlich ist. Dieser Umstand ist hinderlich, vor allem wenn eine bestimmte Steuerung grundsätzlich für eine Vielzahl unterschiedlicher Anwendungen geeignet ist und deren Funktionalität nicht voll genutzt wird.

Daher besteht bei solchen frei programmierbaren Steuerungen ein Bedarf an Software-Applikationen, welche parallel und unabhängig voneinander betrieben werden können, ohne sich gegenseitig zu beeinflussen, auch wenn sie Abläufe steuern, welche unterschiedlichen Sicherheitsanforderungen genügen müssen. Insbesondere muss dabei der Austausch von Ein- und/oder Ausgangsinformationen auf einer einkanaligen Hardware möglich sein, die bezüglich eines bestimmten Sicherheitsstandards zertifiziert ist.

Die Offenlegungsschrift DE 10 2006 037 153 A1 zeigt ein Verfahren zur signaltechnisch sicheren Steuerung und Überwachung eines Fahrzeugs, bei welchem auf einem ersten relativ sichereren Rechner eine Anwendungssoftware zur Verarbeitung von Sensordaten implementiert ist, und der erste Rechner wird von einem zweiten weniger sichereren Rechner entlastet, auf welchem solche Sensordaten verarbeitet werden können, die für nicht sichere Zwecke verwendbar sind, und die beiden Rechner kommunizieren über eine Schnittstelle und eine Software zur Systemdiagnose miteinander.

Die Offenlegungsschrift DE 10 2009 011 679 A1 zeigt ein Verfahren und eine Vorrichtung zum Erstellen eines Anwenderprogramms für eine Sicherheitssteuerung, wobei eine Trennung in mindestens zwei Programmteile mit unterschiedlichen Anforderungen an die Sicherheit erfolgt. Basierend auf einem wiederholt zugewiesenen Momentanwert, Zuweisungsbedingungen für den Momentanwert und einer Zuordnung in Form von Wandlungsanweisungen erfolgt eine Interaktion zwischen weniger sicheren Variablen aus einem ersten Programmteil und sichereren Variablen aus einem zweiten Programmteil, um eine Umwandlung einer nichtsicherheitsrelevanten Programmvariable in eine sicherheitsrelevante Programmvariable zu erzielen, wodurch ein fehlersicher ausgebildeter Sensor für das Bereitstellen der Momentanwerte nicht mehr erforderlich ist. Bei diesem Verfahren kann ein sicherer Programmcode von einem weniger sichereren Programmcode getrennt werden, um ein Anwenderprogramm gestützt auf die sichereren Funktionen auf einem Mikroprozessor laufen zu lassen.

Die Offenlegungsschrift DE 10 2009 019 087 A1 zeigt eine Sicherheitssteuerung und ein Verfahren zum Steuern einer automatisierten Anlage, wobei für Programmvariablen Prüfwerte ermittelt werden können, insbesondere basierend auf die Programmvariablen kennzeichnenden Momentanwerten. Dabei kann eine redundante Steuerung mit zwei unabhängigen Prozessoren für jeweils einen Typ Programmvariablen vorgesehen sein, wobei ein Ergebnisvergleich, insbesondere Momentanwertvergleich, erfolgt, um eine Initialisierung der Sicherheitssteuerung in Bezug auf eine momentane Sicherheits-Situation durchführen zu können.

Die Offenlegungsschrift DE 10 2009 019 089 A1 zeigt ein Verfahren und eine Vorrichtung zum Erstellen eines Anwenderprogramms für eine Sicherheitsteuerung, wobei ein Quellcode mit Steuer- und Diagnoseanweisungen erstellt wird, und basierend auf dem Quellcode ein Maschinencode erzeugt wird, um unabhängig von den Diagnoseanweisungen eine Prüfsumme für einen Teil des Maschinencodes zu ermitteln. Dabei beruht die Sicherheitssteuerung auf einer bestimmten Art und Weise der Ermittlung dieser Prüfsumme in Abhängigkeit von bestimmten Sicherheitscodes. Aus den vorgenannten Druckschriften geht hervor, dass bei Sicherheitssteuerungen eine Unabhängigkeit des Ablaufs der sicherheitskritischen Programmkomponenten dann sichergestellt ist, wenn die einen höheren Sicherheitsstandard erfordernden Anwendungen getrennt von weniger sicheren Anwendungen laufen.

Weiterhin ist in der DE 10 2005 007 477 A1 ein Maschinensteuerungsgerät auf Basis eines mit einem Betriebssystem betriebenen PC gezeigt, bei welchem neben einer Standardsteuerung auch eine Sicherheitssteuerung vorgesehen ist, und eine Trennung der sicherheitsrelevanten Funktionen von den nicht sicherheitsrelevanten Funktionen kann durch eine modulare Aufteilung in mindestens ein Sicherheitsmodul innerhalb des Maschinensteuerungsgeräts erfolgen, insbesondere durch eine Trennung auf Hardwareebene, wobei sicherheitsrelevante Funktionen ausschließlich in Sicherheits-Modulen ablaufen, und eine getrennte Zertifizierung der sicherheitsrelevanten Baugruppen wird ermöglicht. Dabei ist vorgesehen, dass über den nicht sicheren Teil eine Schnittstelle nach außen gebildet ist. Das Sicherheitsmodul kann als ein PC-Einsteckmodul ausgebildet sein, welches über eine PCI-Schnittstelle mit der Standardsteuerung in Kommunikation ist.

In der DE 102 12 151 B4 ist ein Verfahren für sicherheitskritische Anwendungen gezeigt, bei welchem Daten in zwei unterschiedlichen Verarbeitungsumgebungen jeweils unter Verwendung eines Sicherheitszeitintervalls entschlüsselt werden, so dass die entschlüsselten Daten dank der vorhandenen Redundanz zeitdiversitär oder auch datendiversitär ausgegeben werden können und das Ausfallrisiko vermindert ist.

In der 10 2005 009 795 A1 ist ein Mikroprozessorsystem für eine Maschinensteuerung in sicherheitszertifizierbaren Anwendungen gezeigt, bei welchem neben einem Hauptprozessor auch mindestens ein Sicherheitsprozessor mit eigenem Programm/Datenspeicher zum Einsatz kommt, wobei beide Prozessoren denselben Kommunikations-Bus nutzen. Es können Programmdaten in den Programmspeicher des Sicherheitsprozessors geschrieben werden, ohne dass der Hauptprozessor auf diese Daten zugreifen kann, insbesondere indem eine sichere Übertragungsstrecke aus allgemeinem Bus und Mailbox mit Statemachine zum Einladen von Daten in den Sicherheitsprozessor genutzt wird.

In der DE 10 2006 001 805 A1 ist eine Sicherheitsvorrichtung zum mehrkanaligen Steuern einer sicherheitstechnischen Einrichtung im Fehlerfall gezeigt, mittels welcher eine sicherheitstechnische Einrichtung in einen gesicherten Zustand gefahren werden kann, wobei zwei Steuereinrichtungen über eine Eingangsstufe miteinander in Verbindung sind, welche eine Signalmodulation vornimmt.

In der DE 10 2009 047 025 B3 ist ein Echtzeit-Laufzeitsystem und ein Funktionsmodul dafür gezeigt, bei welchem bei bestimmten Zustandsübergängen, speziell zwischen Prüfbetrieb und Echtzeitbetrieb, ein An- bzw. Abmelden des Funktionsmoduls erfolgen kann.

In der DE 10 2010 038 484 A1 ist ein Verfahren für eine Vorrichtung zum Steuern einer Anlage gezeigt, bei welchem eine Fehlerüberwachung erfolgen kann.

Der vorbekannte Stand der Technik betrifft damit allgemein speicherprogrammierbare Steuerungen, welche eine getrennte Architektur in Bezug auf einzelne Rechner, Programmteile oder Steuerungen aufweisen oder eine zeitweise Entkopplung von Funktionsmodulen ermöglichen, und welche sich für Anwendungen eignen, die gewissen Sicherheitsanforderungen gerecht werden müssen. Bei solchen Architekturen kann ein normales Laufzeitsystem (LZS) auf einer Hardware integriert sein, das in der Lage ist, ein Anwendungsprogramm (AWP) zu starten und ablaufen zu lassen, wobei das LZS Daten von physikalischen Eingängen und Bussystemen einliest und diese Daten dem AWP zur Verarbeitung zur Verfügung stellt, und wobei durch das LZS ein Zyklus des AWP gestartet und die Eingangsdaten und evtl. gespeicherte Daten miteinander verknüpft werden, und wobei am Ende des AWP-Zyklus Ausgangsdaten zur Verfügung gestellt werden, die vom LZS an physikalische Ausgänge und Bussysteme ausgegeben werden, was die grundsätzliche Funktionalität einer speicherprogrammierbaren Steuerung (SPS) darstellt. Bei solchen Architekturen kann wahlweise ein sicheres LZS auf einer Hardware integriert werden, welches identisch wie ein normales LZS funktioniert, und welches zusätzlich diverse Sicherheitsnormen erfüllt, z. B. 61508 oder 13849. Üblicherweise ist dabei ein Betriebssystem vorgesehen, welches auch implementiert werden muss, und bei welchem eine Änderung einzelner sicherheitsrelevanter Funktionen zu einer aufwendigen Nachzertifizierung führen würde. In der bereits erwähnten DE 10 2005 007 477 A1 wird bereits daraufhingewiesen, dass eine Maschinensteuerung mit einzelnen sicherheitszertifizierbaren Sicherheits-Modulen Vorteile bei der Zertifizierung bietet, jedoch ist dabei eine bestimmte PC-Infrastruktur erforderlich, und die Sicherheits-Module müssen über ein Betriebssystem und einen PCI-Bus eingebunden werden.

Aufgabe ist, eine als funktional sicher einstufbare Architektur oder ein als funktional sicher einstufbares Verfahren bereitzustellen, insbesondere im Zusammenhang mit einer Steuerung für ein Anwendungsprogramm (AWP), und einem Betreiber einer Hardwareumgebung die Möglichkeit zu erhalten, auf einfache oder kostengünstige Weise Änderungen an einem AWP vorzunehmen, selbst wenn unterschiedliche Abläufe, Prozesse oder Teilprogramme bzw. Programmschritte mit jeweils spezifischen, insbesondere voneinander abweichenden, Sicherheitsanforderungen zu steuern sind. Insbesondere ist es eine Aufgabe, ein Anwendungsprogramm auf einem spezifischen Sicherheitsniveau so zu steuern, dass eine Beeinträchtigung der Sicherheit des Gesamtsystems ausgeschlossen werden kann. Eine Aufgabe kann auch darin gesehen werden, mit einer spezifischen Hardwareumgebung eine Ablaufsteuerung derart zu ermöglichen, dass mehrere Abläufe mit unterschiedlichem Sicherheitsstandard sich gegenseitig nicht beeinflussen, auch wenn Änderungen an einem der Abläufe vorgenommen werden müssen. Nicht zuletzt besteht eine Aufgabe auch darin, eine einfache Hardware- oder Steuerungs-Architektur bereitzustellen, bei welcher relativ sicherere Abläufe neben normal sicheren Abläufen auf einfache oder flexible Weise gesteuert werden können, ohne dass das Sicherheitsniveau beeinträchtigt wird.

Zur Lösung mindestens einer der genanten Aufgaben kann von einer Vorrichtung gemäß dem Oberbegriff des Anspruchs 1 sowie einem Verfahren gemäß dem Oberbegriff des Anspruchs 11 ausgegangen werden.

Erfindungsgemäß wird vorgeschlagen, bei der Vorrichtung gemäß dem Oberbegriff eine Laufzeitsystemstruktur vorzusehen, bei welcher das Laufzeitsystem (LZS) Bestandteil einer Laufzeitsystemstruktur ist, welche mindestens dual ausgebildet ist und auf einem ersten und einem zweiten LZS basiert, wobei das erste LZS als ein sicheres und das zweite LZS als ein normales LZS ausgebildet ist. Die beiden LZS werden jeweils spezifischen Sicherheitsanforderungen gerecht. Das normale LZS kann von dem sicheren LZS aktiviert werden, insbesondere in einer ersten (untersten) Prioritätsebene. Die Laufzeitsystemstruktur ist damit in unterschiedlichen Sicherheitsniveaus strukturiert bzw. weist unterschiedliche Sicherheitsniveaus auf. Dadurch kann eine einfache Architektur bereitgestellt werden, bei welcher ein eigenes Betriebssystem nicht erforderlich ist, so dass Änderungen ohne aufwendige Nachzertifizierung vorgenommen werden können. Insbesondere kann ein sicheres LZS zum Einsatz kommen, welches vorzertifiziert ist, und ist das sichere LZS einmal zertifiziert bzw. abgenommen, so bleibt es dies. Ein Anbieter von Steuerungen muss sich dabei nur darum bemühen, für das Aufsetzen des sicheren LZS auf der eigenen herstellerspezifischen Hardware eine Zertifizierung zu erlangen, insbesondere indem das sichere LZS und das normale LZS zusammen mit der Hardware als eine Einheit zertifiziert werden.

Bevorzugt sind die im Oberbegriff genannten Speichertypen als herkömmliche standardgemäß erhältliche Speicherkomponenten ausgeführt. Bei der erfindungsgemäßen Vorrichtung ist es jedoch auch möglich, wahlweise die im Oberbegriff genannten Speichertypen als einen einzelnen zusammenhängenden Speicher, also einer einzelnen physikalischen Speichereinheit auszubilden, und in dieser einzelnen physikalischen Speichereinheit verschiedene Speicherbereiche vorzusehen, auf welche dann gesondert zugegriffen werden kann. Insbesondere können ein erster Speicherbaustein und ein zweiter Speicherbaustein und Speichermitteln zusammen in einer einzelnen physikalischen Speichereinheit vorgesehen sein.

Dabei kann das erste LZS parallel zu dem zweiten LZS betrieben werden, ohne dass Redundanz vorliegt, sondern die beiden LZS führen jeweils eigene Schritte bzw. Prozesse aus und eine Steuerung von unterschiedlichen Prozessen kann parallel erfolgen. Ein speziell für die mindestens dual ausgebildete Laufzeitsystemstruktur zugeschnittenes Betriebssystem ist nicht erforderlich, insbesondere weil durch die erfindungsgemäße Architektur, insbesondere mittels des Mikrocontrollers, ein einfaches multitasking-fähiges System nachgebildet werden kann. Durch die erfindungsgemäße Laufzeitsystemstruktur wird eine autarke Architektur bereitgestellt, welche nicht notwendigerweise ein eigenes Betriebssystem erfordert. Insbesondere kann die Struktur eines Mikrocontrollers genutzt werden, indem timer mit dem Mikrocontroller als Betriebssystem-Ersatz genutzt werden und unterschiedliche task-Ebenen ohne Betriebssystem bereitgestellt werden können. Als ein Beispiel kann ein Mikrocontroller genannt werden, welcher vier timer aufweist, und diese timer können erfindungsgemäß bestimmten Prioritätsebenen zugeordnet werden. Die Abarbeitung von Aufgaben kann auf diese Prioritätsebenen verteilt werden. Die Anzahl an Prioritätsebenen ist jedoch nicht notwendigerweise an die Anzahl der timer gekoppelt. Wahlweise kann die Anzahl der Prioritätsebenen, insbesondere der Prioritätsebenen für sichere Funktionalität und für eine Systemüberwachung, von der Anzahl der timer abweichen, was bevorzugt über Software-Mechanismen gesteuert werden kann, so dass ein beliebiger Mikrocontroller unabhängig von der Anzahl gewünschter Prioritätsebenen genutzt werden kann. Es kann aber vorteilhaft sein, solche Mikrocontroller zu nutzen, die eine für die gewünschte Anzahl an Prioritätsebenen besonders geeignete Struktur bzw. Anzahl an timern aufweisen, so dass auf spezielle Software-Mechanismen verzichtet werden kann.

Nichtsdestotrotz ist es auch möglich, zusätzlich ein sicheres Betriebssystem vorzusehen, insbesondere ein sicheres Echtzeit-Betriebssystem, welches die speziell erforderlichen Sicherheitsanforderungen erfüllt, und mittels des sicheren Betriebssystems die Anwendungsprogramme ablaufen zu lassen, was insbesondere dann vorteilhaft sein kann, wenn mehr als zwei LZS zusammen die Anwendungsprogramme ablaufen lassen sollen. Dann sind die LZS in ihrer Gesamtheit als die Laufzeitsystemstruktur ausgebildet und bilden zusammen eine Schnittstelle zwischen den AWP und dem sicheren Betriebssystem. Wahlweise kann die Schnittstelle auch allein durch das sichere LZS gebildet sein.

Es ist aber erfindungsgemäß nicht erforderlich, ein Betriebssystem vorzusehen: die erfindungsgemäße Architektur liefert die Möglichkeit, dass die beiden LZS, also das sichere und das normale LZS, nebeneinander die AWP ablaufen lassen können, insbesondere auch aufgrund deren Anordnung in unterschiedlichen Prioritätsebenen. Die Laufzeitsystemstruktur kann so ausgebildet sein, dass jedes LZS die Aufgaben übernimmt, für die es optimalerweise vorgesehen ist. Das sichere LZS kann auch die Abarbeitung von Aufgaben steuern, welche eigentlich vom normalen LZS gesteuert werden sollen, aber nicht umgekehrt. Die Aufgaben können unter den beiden LZS verteilt werden, insbesondere durch das sichere LZS. Insbesondere kann eine Zuordnung von Eingangsdaten, die Art der Verknüpfung von Ein- und/oder Ausgangsdaten und die Zuordnung von Ausgangsdaten durch einen Applikationsprogrammierer erfolgen, welcher der Ersteller des bzw. der AWP sein kann. Das normale LZS kann von dem sicheren LZS aufgerufen werden, insbesondere in einer ersten (untersten) Prioritätsebene. Auf diese Weise kann auch eine effiziente Arbeitsweise sichergestellt werden. Aufgaben der sicheren Funktionalität werden im sicheren AWP abgearbeitet, und Aufgaben der normalen Funktionalität im normalen AWP. Die Aufgaben können unterschiedlichen Prioritätsebenen zugewiesen werden, z.B. einer zweiten Prioritätsebene Aufgaben im Zusammenhang mit einer so genannten process safety time, die abhängig von einer jeweiligen Maschine z.B. im Bereich von 100-200 ms liegt, und z.B. einer dritten und vierten (jeweils höheren) Prioritätsebene Aufgaben im Zusammenhang mit einem digitalen Regelungsprozess, welche z.B. alle 5-10 ms abgearbeitet werden.

Durch die Architektur mit verschiedenen Prioritätsebenen ist es zweckdienlich, wenn ein Systemintegrator, also ein Programmierer, sich darum bemüht, der ersten (untersten) Prioritätsebene genug Raum zu geben, damit in dieser Ebene überhaupt noch tasks oder Teilaufgaben abgearbeitet werden können. Insbesondere dürfen Ebenen mit einer höheren Priorität, also z.B. eine zweite, dritte und vierte Ebene, nicht zu viel Rechenzeit beanspruchen, damit tasks auch in der ersten Prioritätsebene abgearbeitet werden können.

Als eine Aufgabe ist dabei bevorzugt ein task zu verstehen, welcher als ein Teil eines AWP in einer bestimmten Prioritätsebene ausgeführt wird. In einem weiteren Sinne ist als eine Aufgabe bevorzugt jeder Prozessschritt zu verstehen, bei welchem in einer bestimmten Prioritätsebene ein Teil eines AWP abgearbeitet wird, sei es eine Regelung oder die Ausführung einer Stellbewegung oder ein sonstiger Rechenzeit erfordernder Rechenschritt. Im Zusammenhang mit der sicheren Funktionalität kann eine Aufgabe z.B. eine ungewollte Bewegung einer Maschine zu verhindern, oder eine Lastmomentbegrenzung bei einem Kran zu überwachen sein, und im Zusammenhang mit der normalen Funktionalität kann eine Aufgabe z.B. das Zu- und Abschalten einer Kabinenheizung sein.

Als eine Laufzeitsystemstruktur ist dabei bevorzugt eine Struktur bzw. Umgebung für ein LZS zu verstehen, bei welcher es ermöglicht wird, ein einzelnes LZS so in eine Hardwareumgebung zu integrieren, dass ein bestimmtes AWP auf einem Computer lauffähig wird. Ist nur ein einziges LZS vorgesehen, so wie dies bei vorbekannten Steuerungen der Fall ist, so kann die Laufzeitsystemstruktur bevorzugt dem LZS selbst bzw. der steuerungsspezifischen Ablaufumgebung entsprechen. Eine begriffliche Abgrenzung ist nicht erforderlich.

Als eine duale Laufzeitsystemstruktur ist demnach erfindungsgemäß bevorzugt eine Struktur bzw. Umgebung für mehrere LZS zu verstehen, bei welcher es ermöglicht wird, mehrere LZS nebeneinander und auch unabhängig voneinander vorzusehen. Bei einer dualen Laufzeitsystemstruktur liegt somit eine Art Laufzeitsystem-Gliederung oder auch -Hierarchie vor. Insbesondere können bei einer dualen Laufzeitsystemstruktur zwei LZS vorgesehen sein, die separat für eine jeweils eigene Ablaufsteuerung auf unterschiedlichen Sicherheitsniveaus ausgebildet sind. Eine Hierarchie kann zumindest insofern vorgesehen sein, als das sichere LZS das normale LZS aktivieren oder zeitweise in einen inaktiven Zustand bringen kann. Der Begriff einer dualen Laufzeitsystemstruktur kann somit bevorzugt im Sinne einer Architektur verstanden werden, welche die Koexistenz von mindestens zwei LZS ermöglicht. Die beiden LZS können unterschiedlichen Sicherheitsanforderungen gerecht werden, so dass von einer dualen sicherheitsgestuften Laufzeitsystemstruktur gesprochen werden kann. Die Laufzeitsystemstruktur kann mehr als zwei LZS betreffen und ist dann nicht mehr dual, sondern als Triple oder Quadrupel oder mit noch zahlreicher Unterscheidung zwischen LZS ausgebildet. Bei einem Tripel an LZS können also drei unterschiedliche LZS parallel vorgesehen sein, bei einem Quadrupel vier LZS.

Die LZS sind insofern voneinander entkoppelt, als die unterschiedlichen Prioritäten der tasks des sicheren LZS immer höhere Priorität in der Bearbeitung haben als die tasks des normalen LZS. Gemäß einem Beispiel können (müssen aber nicht zwingend) für die sichere Funktionalität drei Prioritätsebenen vorgesehen sein, insbesondere eine zweite, dritte und vierte Prioritätsebene, und für die normale Funktionalität kann (muss aber nicht zwingend) lediglich eine Hintergrundschleife mit niedrigster Priorität vorgesehen sein. Programmtechnisch sind das sichere und das normale LZS somit zumindest durch die Priorisierung entkoppelt. Die einzige Abhängigkeit kann darin bestehen, dass das sichere LZS das normale LZS aufruft, bzw. startet. Ist kein Betriebssystem vorgesehen, so kann das sichere LZS die Steuerung allein übernehmen. Für den Fall dass ein sicheres Betriebssystem vorgesehen ist, insbesondere ein sicheres multitaskingfähiges Echtzeit-Betriebssystem, kann dieses die Funktion des sicheren LZS übernehmen.

Als ein Laufzeitsystem (LZS) ist dabei jeweils bevorzugt eine Ablaufumgebung zu verstehen, mit welcher ein Anwendungsprogramm (AWP) ausgeführt werden kann, ohne dass dieses direkt mit einem Betriebssystem kommunizieren muss. Das LZS stellt somit sicher, dass ein AWP lauffähig ist.

Bevorzugt ist das erste LZS in einem anderen physikalischen Speicher vorgesehen als das zweite LZS. Weiter bevorzugt sind die LZS jeweils in einem Flash-Baustein vorgesehen, insbesondere einem nullspannungssicheren Speicher. Besonders bevorzugt ist das erste sichere LZS in einem On-Chip-Flash-Baustein vorgesehen und das zweite normale LZS in einem On-Board-Flash-Baustein.

Unter sicherheitskritischen Anwendungen in einer Maschinenumgebung sind alle sicherheitskritischen Anwendungen zu verstehen, bei welchen einzelne Maschinen, Geräte oder Anlagen zumindest teilweise basierend auf Abläufen oder Prozessen arbeiten, welche gewissen Sicherheitsstandards genügen müssen. Als Maschinen kommen insbesondere mobile Arbeitsmaschinen oder allgemein Baumaschinen in Betracht.

Als ein sicheres LZS ist dabei allgemein ein LZS bzw. eine Steuerungskomponente zu verstehen, bei welchem eine Überprüfung durch das LZS selbst erfolgt. Es kann eine eigene Abschaltung oder ein Wechsel in einen Sicherungsmodus erfolgen wenn weniger sichere Teilprozesse von allein erkannt werden. Sichere LZS können sich selbst überprüfen bzw. die eigenen Aktionen selbst "zurücklesen". Im Gegensatz dazu weist ein als normal bezeichnetes LZS diese Fähigkeit nicht auf.

Der Begriff Steuerungskomponente kann hier im gleichen Zuge mit dem Begriff Laufzeitsystem (LZS) genannt werden, da ein LZS bevorzugt als eine Softwarekomponente aufgefasst werden kann und im vorliegenden Fall von zwei unterschiedlichen bzw. unabhängigen LZS gesprochen wird. Durch die Trennung von sicheren und normalen Abläufen kann daher auch von zwei Steuerungskomponenten als Teil eines Steuerungssystems gesprochen werden. Der Begriff Steuerungssystem ist jedoch bevorzugt als Oberbegriff aufzufassen, denn das erfindungsgemäße Steuerungssystem ist so konzipiert, dass es zwei LZS umfasst.

Mit anderen Worten liegt der Erfindung auch die Erkenntnis zugrunde, dass zwei LZS denselben Prozessor bzw. dieselbe Hardware nutzen können, ohne dass eine gegenseitige Behinderung oder eine Gefährdung der Sicherheitsanforderungen befürchtet werden muss. Dieses Konzept für eine Architektur bietet auch insofern Vorteile, als mehrere Prozessoren oder sonstige redundante Hardware-Komponenten nun nicht mehr erforderlich sind. Eine bisher erforderliche, aus Sicherheitsgründen möglichst vollständige physikalische Trennung kann u.a. durch verschiedene Prioritätsstufen in Verbindung mit einer Systemüberwachung sowie die Nutzung von miteinander kommunizierenden Speicherbauteilen zusammen mit einem Überwachungs- und/oder Schutzbaustein überwunden werden, wie im Folgenden näher erläutert.

Dabei kommt es auf eine nähere Definition des Sicherheitsstandards nicht an. Das Sicherheitsniveau kann verschieden hoch sein. Ein für eine bestimmte Anwendung als sicheres LZS bezeichnetes LZS kann daher in einer anderen Anwendung nur als normales LZS gelten, insbesondere weil es trotz der Fähigkeit sich selbst zu überprüfen bei der Überprüfung gewisse Kriterien nicht erfassen kann, welche aber von dem so genannten sicheren LZS erfasst werden können. Insofern handelt es sich bei den Begriffen "normal" und "sicher" um relative Begriffe, die hervorheben, dass bei zwei LZS das eine davon eine im Hinblick auf die Fähigkeit sich selbst zu überprüfen eine verbesserte Funktionalität aufweist als das andere LZS. Die erfindungsgemäße Architektur ist daher auch nicht auf einen bestimmten Sicherheitsstandard beschränkt.

Bevorzugt ist das sichere LZS in Verbindung mit einer Systemüberwachung, die insbesondere eine Überwachungskomponente aufweisen kann, und die Systemüberwachung ist bevorzugt auf einer Prioritätsebene angeordnet, die höher ist als eine Prioritätsebene, in welcher das sichere LZS angeordnet sein kann. Hierdurch kann auf einfache Weise Rückwirkungsfreiheit sichergestellt werden.

Dabei kann die Erfindung insbesondere in den Kontext folgender Komponenten bzw. Bausteine eingeordnet werden, welche eine Ablaufsteuerung ermöglichen und bei einer möglichen Ausführungsform zumindest teilweise als Komponenten der erfindungsgemäßen Architektur betrachtet werden können:
- eine CPU mit einem On-Chip-RAM-Baustein, entsprechend einem ersten integrierten Speicherbaustein, und mit einem On-Chip-Flash-Baustein, entsprechend einem zweiten integrierten Speicherbaustein;
- ein von der CPU getrennt angeordneter On-Board RAM-Baustein, entsprechend einem ersten integrierten Speicherbaustein, und ein von der CPU getrennt angeordneter On-Board Flash-Baustein, entsprechend einem Speicherbereich;
- die erfindungsgemäße Hardwarekomponente, auf welcher die Laufzeitsystemstruktur vorgesehen ist.

Die RAM-Bausteine sind jedoch nur als eine mögliche Variante für die Speicher aufzufassen. Es können andere Speicher verwendet werden, und auch die Anordnung kann variiert werden. Die Verwendung von Flash-Bausteinen kann von einer speziellen Implementierung abgeleitet sein. Gemäß einer Variante können alle Speicherkomponenten z.B. in einem einzigen Speicherbaustein vereint sein, welcher mehrere Speicherbereiche aufweist, die jeweils mit einem bestimmten LZS oder einem bestimmten AWP in Verbindung stehen. D.h., die spezifische Zuordnung zu einer Hardware ist variabel. Daher kann beispielsweise eine Aufteilung vorgenommen werden in: Programmspeicher LZS (sicher), Programmspeicher AWP (sicher), Arbeitspeicher LZS (sicher), Arbeitsspeicher AWP (sicher), Programmspeicher LZS (normal), Programmspeicher AWP (normal), Arbeitspeicher LZS (normal), Arbeitsspeicher AWP (normal), gemeinsamer Speicher (shared memory) LZS, gemeinsamer Speicher (shared memory) APW.

Bei einer erfindungsgemäßen Architektur ist das sichere LZS grundsätzlich verantwortlich für das Einlesen von Eingangsdaten aus physikalischen Eingängen und Bussystemen und für die Ausgabe von Ausgangsdaten an physikalische Ausgänge und Bussysteme. Diese Aufgabe wird aus Gründen der funktionalen Sicherheit vom sicheren LZS übernommen. Das sichere LZS wird dabei in den meisten Fällen nur eine Teilmenge der insgesamt vorhandenen Ein- und Ausgangsinformationen verwenden, da eine nicht vom sicheren LZS verwendete Restmenge der insgesamt vorhandenen Eingangsinformationen von dem sicheren LZS für das weniger sichere, d.h. normale LZS zur Verfügung gestellt werden kann. Eine nicht vom sicheren LZS verwendete Restmenge der insgesamt vorhandenen Ausgangsinformationen kann vom weniger sicheren, d.h. normalen LZS genutzt werden. Dazu können die entsprechenden Ausgangsinformationen dem sicheren LZS übergeben werden.

Dabei ist das sichere LZS als erstes LZS bezeichnet, weil es eine Vorrangstellung gegenüber dem normalen LZS einnimmt und das zweite LZS bildlich gesprochen eher in das sichere LZS integriert ist als dass es autonom parallel dazu arbeitet. Gleichzeitig ist es neben der vorhandenen Hardwarekomponente möglich, weitere Komponenten wie z.B. Leiterplatten zur Erweiterung der Anzahl der physikalischen Ein-/Ausgänge beziehungsweise der Bussysteme hinzuzufügen. Damit kann die Zahl der auszutauschenden Ein-/Ausgangsinformationen erhöht werden, was gegebenenfalls erfordern kann, die Kapazität des dafür vorzusehenden Speicherbereichs anzupassen.

Der erste Speicherbaustein kann z.B. als Arbeitsspeicherbaustein, insbesondere On-Chip-RAM-Baustein ausgebildet sein, und der zweite Speicherbaustein kann z.B. als Flashspeicherbaustein, insbesondere On-Chip-Flash-Baustein ausgebildet sein.

Die Rückwirkungsfreiheit des normalen AWP kann dabei durch den Einsatz eines Schutzbausteins und/oder eines Überwachungsbausteins sichergestellt werden, und eine Rückwirkungsfreiheit in Bezug auf Speicher ist dadurch gegeben, dass das sichere LZS mittels einer Systemüberwachung so kontrolliert wird, dass das normale LZS bzw. das normale AWP - selbst bei falscher Systemauslegung durch einen Systemintegrator - nicht in der Lage ist, das sichere LZS bzw. das sichere AWP von der Abarbeitung der Aufgaben abzuhalten. Umgekehrt sind sicheres LZS und sicheres AWP - bei falscher Systemauslegung - durchaus in der Lage, das normale LZS bzw. das normale AWP am normalen Ablauf zu hindern. Der Schutzbaustein kann z.B. als eine so genannte memory protection unit (MPU) ausgebildet sein. Der Überwachungsbaustein kann z.B. als Speicherverwaltungseinheit, d.h. als so genannte memory management unit (MMU) ausgebildet sein. Die MMU kann dabei die umfassendere Funktionalität liefern, unter anderem Schutz bzw. Sicherheit bieten, aber auch z.B. einen virtuellen Adressraum aufspannen.

Es sei erwähnt, dass die vorgesehene Hardwarekomponente mit integrierten Bausteinen ausgestattet sein kann, die bei einer Steuerung des erfindungsgemäßen Verfahrens mitwirken können. Hierunter fallen z.B. die oben erwähnten MPU und MMU, die als integrierte Komponenten in normalen 32-Bit-CPUs ausgeführt sein können, und nicht als zusätzlich notwendige Komponenten. MPU (Memory Protection Unit) und/oder MMU (Memory Management Unit) wirken dahingehend, dass für frei wählbare Zeiten der Zugriff auf festgelegte Speicherbereiche gesperrt werden kann. Somit kann der Arbeitsspeicher des sicheren LZS für die Zeit der Bearbeitung des weniger sicheren, d.h. normalen LZS gesperrt werden. Damit kann verhindert werden, dass ein normaler Ablauf einen sicheren Ablauf beeinflusst. Insbesondere kann die MMU verhindern, dass das normale LZS auf das sichere LZS rückwirkt. Je nachdem an welcher Stelle sich ein Ablauf in einem sicheren LZS befindet, kann die MMU dabei aktiviert oder deaktiviert werden.

Gemäß einem Ausführungsbeispiel ist das erste Laufzeitsystem für den Ablauf eines ersten Anwendungsprogramms vorgesehen und das zweite Laufzeitsystem ist für den Ablauf eines zweiten Anwendungsprogramms vorgesehen. Die beiden Anwendungsprogramme können dabei in einem einzigen Speicher oder auch in unterschiedlichen physikalischen Speichern ablaufen, von denen einer bevorzugt dem zweiten Speicherbaustein entspricht, welcher insbesondere als integrierter Flashspeicherbaustein, bevorzugt als on-chip-Flashbaustein ausgebildet sein kann. Beide Anwendungsprogramme können dabei mit der Hardwarekomponente interagieren, insbesondere über die Laufzeitsysteme bzw. die Laufzeitsystemstruktur.

Hierdurch können innerhalb eines Gerätes funktional sichere und weniger sichere normale Anwendungsprogramme (AWP) nebeneinander ablaufen, und ein Einfluss eines weniger sicheren (normalen) AWP auf das sichere AWP kann ausgeschlossen werden, insbesondere indem durch eine Systemüberwachung das sichere LZS gegenüber dem normalen LZS die Priorität eingeräumt wird. Dadurch kann eine Trennung der AWP erfolgen, und ein AWP kann umprogrammiert werden, ohne dass das andere AWP davon betroffen ist.

Das sichere LZS ist dabei bildlich gesprochen die Wanne oder Schale, in welcher ein sicheres Anwendungsprogramm eingebettet ist. Mit anderen Worten ändert sich aus Sicht eines Kunden nur ein normales Anwendungsprogramm (AWP), an welchem er ohne großen Aufwand Änderungen vornehmen kann, und dem Kunden obliegt allein eine Zertifizierung eines sicheren AWP. Dabei kann es in besonderen Fällen auch zweckdienlich sein, seitens des Anbieters von Steuerungen das normale LZS auf durch den Kunden vorgenommene Änderungen am normalen AWP anzupassen.

Der Erfindung liegt damit auch die Erkenntnis zugrunde, dass eine Softwarearchitektur realisiert werden kann, bei welcher zwei unterschiedliche Steuerungssysteme auf einer Hardwarekomponente vereint werden können, so dass für eine frei programmierbare Steuerung zwei AWP erstellt werden können, die sicherheitstechnisch unabhängig voneinander sind und unabhängig voneinander ablaufen. Die Steuerungssysteme können jeweils mindestens ein LZS umfassen. Eine Verbindung von zwei grundsätzlich unabhängigen Steuerungssystemen auf einer Hardwarekomponente führt zu einer Architektur, bei welcher Änderungen vorgenommen werden können, ohne dass eine neue Zertifizierung erforderlich wird. Die beiden Steuerungssysteme können sich vorhandene Ein-/Ausgänge und Bus-Systeme teilen, insbesondere indem Ein- und Ausgang von Daten an Bussen nur und ausschließlich vom sicheren LZS bzw. vom sicheren AWP kontrolliert werden.

Eingangsdaten können z.B. vom sicheren AWP zum normalen AWP über den gemeinsamen Speicher (shared memory) AWP geroutet bzw. weitergereicht werden. Ausgangsdaten können vom normalen zum sicheren AWP ebenfalls über den gemeinsamen Speicher (shared memory) AWP geroutet und dort vom sicheren AWP ggf. gefiltert werden, so dass durch das normale AWP die Daten des sicheren AWP nicht überschrieben werden können. Mit anderen Worten können Eingangsdaten von physikalischen Eingängen wie von Bus-Systemen vom sicheren LZS eingelesen und dem sicheren AWP übergeben werden. Im sicheren AWP können alle Eingangsdaten für das normale AWP verfügbar gemacht werden. Die im normalen AWP erzeugten Ausgangsdaten können dem sicheren AWP übergeben werden und von diesem - gefiltert - dem sicheren LZS und von diesem auf die physikalischen Ausgänge und Bus-Systeme weitergeleitet werden. Somit haben das sichere AWP und das sichere LZS die volle Kontrolle über die E-/A-Daten und das normale AWP kann diese Daten nur insoweit manipulieren, wie das sichere AWP dies zulässt und Rückwirkungsfreiheit kann sichergestellt werden.

Ein- bzw. Ausgangsdaten können aber auch z.B. über das sichere LZS direkt zwischen Hardware und normalem AWP geroutet werden, also ohne Umweg über das sichere AWP.

Durch einen solchen Aufbau kann garantiert werden, dass alle AWP, also sichere und normale AWP, ablaufen können und unabhängig voneinander abgearbeitet werden können. Eine die beiden Steuerungskomponenten bzw. die duale Laufzeitsystemstruktur überwachende Systemüberwachung kann dabei durch Zuteilung geeigneter Bearbeitungszeiten auf unterschiedlichen Prioritätsebenen die Funktionsfähigkeit des Gesamtsystems sicherstellen. Insbesondere können Endlostasks vermieden werden, die eine effiziente Arbeitsweise der gesamten Architektur verhindern würden. Die Systemüberwachung selbst ist auf der oder den höchsten Prioritätsebenen vorgesehen. Die Systemüberwachung kann aus einer oder mehreren Überwachungskomponenten (so genannte watch dogs) und wahlweise auch Unterbrecherkomponenten (so genannte interrupts) gebildet sein, obgleich Unterbrecherkomponenten strenggenommen nicht zur Systemüberwachung zuzuordnen sind. Die Zuordnung der oben erwähnten Prioritäten kann folglich sicherstellen, dass das normale AWP beim Ablauf keine Rückwirkungen auf das sichere AWP haben kann.

Die Systemüberwachung kann dabei ein Teil eines gemäß einem bestimmten Sicherheitsstandard, z.B. SIL2, zertifizierten Zwischenprodukts sein. Die Systemüberwachung kann einer dokumentierten Spezifikation und Realisierung eines sicheren LZS entsprechen, welches von einem Anbieter von Steuerungen für die Umsetzung der eigenen Steuerung zugekauft werden kann.

Die Systemüberwachung kann überprüfen, ob alle Aufgaben bzw. tasks des sicheren AWP gemäß vordefinierter Zeiten abgearbeitet werden. Sollte dies nicht der Fall sein, kann die Steuerung in einen sicheren Zustand gebracht werden. Dabei ist es nicht erforderlich, dass die Systemüberwachung dabei das normale LZS oder das normale AWP überwacht.

Gemäß einem Ausführungsbeispiel, welches mit einem der vorher genannten Ausführungsbeispiele kombinierbar ist, ist das erste Anwendungsprogramm ein sicheres Anwendungsprogramm und das zweite Anwendungsprogramm ein normales Anwendungsprogramm. Hierdurch kann sichergestellt werden, dass der höhere Sicherheitsstandard des einen LZS mit dem höheren Sicherheitsstandard des einen AWP korrespondiert.

Ein Datenaustausch kann dabei entweder über das mit dem sicheren AWP zusammenwirkende sichere LZS oder über das sichere AWP selbst ausgeführt werden. Der Datenaustausch kann über den gemeinsamen Speicher (shared memory) erfolgen, insbesondere zwischen den folgenden Paaren von LZS und AWP:

| | Sicheres LZS | Sicheres AWP | Normales LZS | Normales AWP |
|---|---|---|---|---|
| Sicheres LZS | | | X | X |
| Sicheres AWP | | | X | X |
| Normales LZS | X | X | | |
| Normales AWP | X | X | | |

Im Folgenden werden einige Beispiele für einen Datenaustausch erläutert:
- bei Diagnose und Debugging kann Datenaustausch vom sicheren LZS zum normalen LZS erfolgen und umgekehrt;
- beim Abbilden von Eingangsdaten für das normale AWP kann Datenaustausch vom sicheren AWP zum normalen AWP erfolgen;
- beim Abbilden von Ausgangsdaten vom normalen AWP kann Datenaustausch vom normalen AWP zum sicheren AWP erfolgen;
- beim Abbilden der Gehäuseinnentemperatur, die beispielsweise vom sicheren LZS erfasst und an das normale AWP übermittelt wird, kann Datenaustausch vom sicheren LZS zum normalen AWP erfolgen.

Dabei werden die sicheren und die weniger sicheren, d.h. normalen Programmbausteine in zwei verschiedenen Anwendungsprogrammen organisiert, insbesondere um über die duale Laufzeitsystemstruktur einen unabhängigen Ablauf sicherstellen zu können.

Das sichere AWP kann im Kontext eines sicheren LZS laufen, und das normale AWP kann auf ein normales LZS aufsetzen. Die in dem jeweiligen LZS realisierte Kommunikationsfähigkeit für Upload, also Hochladen, und für Diagnose ermöglicht die getrennte Handhabung von sicherem AWP und normalem AWP, von der Funktionalität her vergleichbar mit zwei unterschiedlichen Steuerungen mit jeweils einem eigenen AWP.

Mit anderen Worten kann eine Abkapselung oder Trennung von den AWP erfolgen, die als funktional sicher zu bezeichnen sind, von solchen AWP, die solchen Sicherheitsanforderungen nicht gerecht werden, also als normale AWP zu bezeichnen sind. Speziell können solche unterschiedliche Sicherheitsstandards aufweisende AWP in unterschiedlichen physikalischen Speichern auf einer einzigen Hardwarekomponente ablaufen. Hierdurch kann die Steuereinrichtung frei programmierbar bleiben durch einen Betreiber oder Anwender, ohne dass Nachzertifizierungen erforderlich sind, insbesondere auch bei SIL2 Software-Applikationen. SIL2 bezeichnet dabei gemäß dem so genannten "safety integrity level" die zweite von vier Anforderungsklassen, wobei SIL2 gemäß der Norm IEC 61508 einen Sicherheitsstandard mit sich bringt, der dem Risiko von großen Schäden an Anlagen oder Personenverletzungen gerecht wird. Der Standard selbst ist jedoch nur exemplarisch zwecks besseren Verständnisses angegeben, und die vorliegende Erfindung kann sich ebenso gut auch andere Sicherheitsstandards, insbesondere auch höhere Sicherheitsstandards wie z.B. SIL3 beziehen. Als weiterer Sicherheitsstandard sei z.B. die Norm DIN EN ISO 13849-1 genannt, welche von Leistungsgraden a bis e spricht, wobei Leistungsgrad (performance level PL) d vergleichbar zu dem Sicherheitsniveau SIL2 ist. Das Sicherheitsniveau selbst ist zunächst ohne Einfluss auf die erfindungsgemäße Architektur, wobei ab einem bestimmten Sicherheitsniveau auch ein zweikanaliger Aufbau bevorzugt sein kann. Aber selbst bei einem zweikanaligen Aufbau kann die Architektur so gewählt werden, dass aus Sicht eines Anwenders nur ein einkanaliger Aufbau vorliegt, insbesondere indem weiterhin nur ein Programmteil und ein Datenspeicherteil vorliegen und lediglich die CPU redundant vorgesehen ist. Letztlich hängt es von den Vorgaben einer speziellen Sicherheitsnorm ab, der das Steuerungssystem gerecht werden soll, welche Kriterien zur Zuerkennung des Zertifikats "sicher" erfüllt sein müssen.

Hierdurch kann auf einer einzelnen frei programmierbaren Steuerung und innerhalb eines einzigen Gerätes der Ablauf von AWP mit unterschiedlich hohen SicherheitsStandards erfolgen.

Gemäß einem Ausführungsbeispiel, welches mit einem der vorher genannten Ausführungsbeispiele kombinierbar ist, ist das erste, sichere Anwendungsprogramm dazu ausgebildet ist, im zweiten Speicherbaustein zu laufen unter Nutzung des ersten Speicherbausteins als Arbeitsspeicher. Hierdurch kann das normale Anwendungsprogramm so gekapselt werden, dass es rückwirkungsfrei gegenüber dem relativ sichereren Anwendungsprogramm bleibt, und umgekehrt auch. Änderungen am weniger sicheren, d.h. normalen Anwendungsprogramm können daher ohne Zertifizierungsprozess des funktional relativ sichereren Anwendungsprogramms erfolgen. Auf diese Weise können Vorgaben vom Gesetzgeber hinsichtlich der Einhaltung von Normen zur funktionalen Sicherheit von Maschinen leichter und für den Betreiber der Maschinen kostengünstiger erfüllt werden, z.B. die EN 13849, die IEC 62061 oder die IEC 61508.

Eine solche Vorrichtung kann als frei programmierbare Steuerung verwendet werden, die als eigenständiges Produkt in einem Gehäuse oder als mit weiteren Komponenten verbindbare Komponente an einen Hersteller oder Betreiber von Maschinen weitergegeben werden kann. Die Vorrichtung kann frei programmierbar sein, ohne dass nach einer Umprogrammierung eine neue Zertifizierung erforderlich wird, selbst bei AWP, die in Verbindung mit eine Zertifizierung erfordernden sicheren AWP laufen.

Dabei kann eine für funktional sichere Anwendungen geeignete Rechnereinheit verwendet werden, mit einer zentralen Recheneinheit (CPU), die mit einem ON-Chip-Flash-Baustein und einem On-Chip-RAM-Baustein versehen ist. Die CPU kann für eine Vielzahl an Selbsttest-Mechanismen vorgesehen sein, so dass sie z.B. für sichere Steuerungen gemäß SIL2 oder auch SIL3 verwendbar ist. Die Rechnereinheit weist üblicherweise auch einen On-Board-Flash-Baustein und einen On-Board-RAM-Baustein auf, die über eine externe Speicherschnittstelle, z.B. ein memory interface, adressiert werden können.

Mit anderen Worten wird nicht nur, so wie bei vorbekannten Systemen bzw. Architekturen, ein normales (LZS) auf einer Hardware integriert, das in der Lage ist, ein AWP zu starten und ablaufen zu lassen, wobei das LZS Daten von physikalischen Eingängen und Bussystemen einliest und diese Daten dem AWP zur Verarbeitung zur Verfügung stellt, und wobei durch das LZS ein Zyklus des AWP gestartet und die Eingangsdaten und evtl. gespeicherte Daten miteinander verknüpft werden, und wobei am Ende des AWP-Zyklus Ausgangsdaten zur Verfügung gestellt werden, die vom LZS an physikalische Ausgänge und Bussysteme ausgegeben werden, was die grundsätzliche Funktionalität einer SPS darstellen würde. Auch wird nicht nur ein sicheres LZS auf irgendeiner Hardware integriert, welches identisch wie ein normales LZS funktioniert, und welches zusätzlich diverse Sicherheitsnormen erfüllt, z. B. 61508 oder 13849. Diese Art des Systemaufbaus bzw. der Systemarchitektur ist bereits vorbekannt. Erfindungsgemäß wird jedoch vielmehr eine duale Laufzeitsystemstruktur bereitgestellt, bei welcher auf einer einzigen Hardwarekomponente mindestens zwei Paare jeweils aus AWP und LZS vorgesehen sind, welche für sich stabil sind und unabhängig vom anderen Paar ablaufen können. Dabei kann das sichere AWP wahlweise in Verbindung zum ersten Speicherbaustein und zum sicheren LZS sein, ggf. ausschließlich. Die Paare sind bevorzugt ausschließlich über den gemeinsamen Speicher (shared memory) miteinander in Verbindung. Da bevorzugt nur eine CPU für das Gesamtsystem bereitgestellt wird, kann jeweils nur ein Zugriff bearbeitet werden. Damit ist es mit einfachen Maßnahmen möglich, Kollisionen zwischen den AWP zu vermeiden, insbesondere indem eine zeitliche Trennung der Zugriffe erfolgt.

Gemäß einem Ausführungsbeispiel, welches mit einem der vorher genannten Ausführungsbeispiele kombinierbar ist, weisen die Speichermittel ein Datenaustauschmittel und einen Speicherbereich auf, wobei das zweite, normale Anwendungsprogramm dazu ausgebildet ist, in dem Speicherbereich zu laufen unter Nutzung des Datenaustauschmittels als Arbeitsspeicher.

Indem das normale AWP in einem Speicherbereich unter Nutzung des Datenaustauschmittels als Arbeitsspeicher abläuft, kann eine Trennung erzielt werden. Dabei kann das normale AWP wahlweise in Verbindung zum Datenaustauschmittel und zum normalen LZS sein, ggf. ausschließlich. Die Zuordnung zu einer spezifischen Hardware kann jedoch je nach Einzelfall-Anforderungen gewählt werden. Insbesondere kann die Zuordnung gemäß den zuvor aufgeführten Programmspeichern, Arbeitsspeichern und gemeinsamen Speichern erfolgen.

Gemäß einem Ausführungsbeispiel, welches mit einem der vorher genannten Ausführungsbeispiele kombinierbar ist, weisen die Speichermittel ein Datenaustauschmittel auf, welches als zweiteiliges Datenaustauschmittel mit einem ersten und einem zweiten Teil ausgeführt ist, wobei der erste Teil als gemeinsamer Speicher ausgebildet ist, und das zweite Laufzeitsystem ist über den gemeinsamen Speicher in Verbindung mit dem ersten Anwendungsprogramm oder dem ersten Laufzeitsystem.

Das Datenaustauschmittel kann als zweiteilige Speicherkomponente ausgeführt sein, welche als einen Teil einen gemeinsamen Speicher aufweist, hier als shared memory bezeichnet. Das erste Laufzeitsystem kann über den gemeinsamen Speicher in Verbindung mit dem zweiten Anwendungsprogramm sein. Die Verbindung kann jeweils über einen eigenen Kommunikationsweg sichergestellt sein. Der Begriff "in Verbindung mit" kann auch im Sinne von "in Kommunikation mit" verstanden werden. Der gemeinsame Speicher (shared memory) kann wahlweise auch zwischen sicherem und normalem AWP vorgesehen sein. Der gemeinsame Speicher (shared memory) kann als ein Teil eines On-Board-RAM-Bausteins ausgebildet sein. Der gemeinsame Speicher (shared memory) kann als ein homogener Arbeitsspeicher bzw. ein Teil eines homogenen Arbeitsspeichers ausgebildet sein, wobei für den Transport bzw. Datenaustausch von der sicheren Funktionalität zu der normalen Funktionalität und umgekehrt jeweils unterschiedliche Speicherbereiche nutzbar sind.

Gemäß einem Ausführungsbeispiel, welches mit einem der vorher genannten Ausführungsbeispiele kombinierbar ist, stehen das zweite Laufzeitsystem und das zweite Anwendungsprogramm mit dem zweiten Speicherbaustein in Verbindung. Das zweite Laufzeitsystem und das zweite Anwendungsprogramm liegen zusammen in dem zweiten Speicherbaustein vor, insbesondere isoliert von dem ersten Laufzeitsystem und dem ersten Anwendungsprogramm. Die Funktionalität von sicherem und normalem AWP kann nichtsdestotrotz unabhängig von einem Speicher sichergestellt sein.

Gemäß einem Ausführungsbeispiel, welches mit einem der vorher genannten Ausführungsbeispiele kombinierbar ist, weisen die Speichermittel ein Datenaustauschmittel und einen Speicherbereich auf, wobei das erste Laufzeitsystem und das erste Anwendungsprogramm über das Datenaustauschmittel mit dem Speicherbereich in Verbindung stehen können. Das zweite Laufzeitsystem und das zweite Anwendungsprogramm liegen zusammen in dem Speicherbereich vor, insbesondere isoliert von dem ersten Laufzeitsystem und dem ersten Anwendungsprogramm. Hierdurch kann ein einfach realisierbarer Speicheraufbau bzw. Speicheranordnung erzielt werden.

Gemäß einem Ausführungsbeispiel, welches mit einem der vorher genannten Ausführungsbeispiele kombinierbar ist, ist die Vorrichtung dazu ausgebildet, eine Ablaufsteuerung in Abhängigkeit von sechs Prioritätsebenen mit zunehmender Priorität vorzunehmen, wobei in einer ersten Ebene mit niedrigster Priorität eine Hintergrundschleife vorgesehen ist und in einer zweiten Ebene mit höherer Priorität das zweite Anwendungsprogramm vorgesehen ist, und wobei das erste Anwendungsprogramm in einer dritten und/oder vierten Ebene mit jeweils höherer Priorität vorgesehen ist. Hierdurch kann bei zwei unterschiedlichen Sicherheitsniveaus auf einfache Weise eine Rückwirkungsfreiheit des normalen auf das sichere AWP erzielt werden.

Gemäß einem Ausführungsbeispiel, welches mit einem der vorher genannten Ausführungsbeispiele kombinierbar ist, ist in einer Ebene mit zweithöchster Priorität eine Überwachungskomponente vorgesehen und in einer Ebene mit höchster Priorität eine Unterbrecherkomponente vorgesehen. Hierdurch kann sichergestellt werden, dass ein so genannter Watch Dog (Überwachungskomponente) oder ein so genannter Interrupt (Unterbrecherkomponente) jedenfalls eingreifen kann. Die Überwachungskomponente kann sowohl eine Hardwarekomponente als auch eine Softwarekomponente sein. Ein Watch Dog kann eine Maßnahme bei einer Implementierung eines sicheren LZS sein. Dieser kann z.B. als hoch prioritäre Software-task ausgebildet sein, könnte aber auch eine Hardwarekomponente sein. Eine höhere Priorität als die Überwachungskomponente haben insbesondere nur Echtzeit-Interrupts, wie etwa von Schnittstellen oder von timern.

Der Überwachungsbaustein und/oder der Schutzbaustein können dazu vorgesehen sein, die Rückwirkungsfreiheit des normalen Anwendungsprogramms sicherzustellen, insbesondere indem der Überwachungsbaustein als MMU (Memory Management Unit) und/oder der Schutzbaustein als MPU (Memory Protection Unit) vorgesehen sind, also standardmäßige Hardware-Einrichtungen, z.B. einer 32-Bit-CPU, die in der Lage sind, den Zugriff auf frei wählbare Speicherbereiche zu sperren. So kann z.B. bei Verlassen des sicheren Teils des Software-Ablaufs der vom sicheren Teil genutzte Speicher so gesperrt werden, dass ein - auch versehentlicher - Zugriff aus dem normalen Software-Ablauf unmöglich wird. Damit kann die Rückwirkungsfreiheit des normalen Software-Ablaufs auf den sicheren Software-Ablauf sichergestellt werden. Die Rückwirkungsfreiheit kann dabei getrennt von einer Systemüberwachung sichergestellt werden. Erfindungsgemäß ist die AWP-Funktionalität dabei über die Laufzeitsystemstruktur getrennt, d.h. es liegen mindestens zwei AWP mit unterschiedlichem Sicherheitsniveau vor. Es liegt eine Trennung einer AWP-Funktionalität in einen sicheren und einen normalen Teil vor. Obgleich sie voneinander getrennt sind, können die AWP eine funktionale Einheit darstellen, insbesondere weil sie auf einer Hardwarekomponente ablaufen können.

Die Hardwarekomponente kann digitale und/oder analoge Ein- und Ausgänge unterschiedlicher Prägung aufweisen, und wobei die Hardwarekomponente mindestens ein Bus-System aufweist. Eine Prägung kann z. B. durch Eigenschaften wie digital, analog, zählend, schaltend, Stromeingang, Spannungseingang o.ä. definiert sein. Als Bus-System kann z.B. ein CAN-, USB-, oder Ethernet-System oder Varianten davon, oder auch ein beliebiges anderes Bus-System vorgesehen sein.

Gemäß einem Ausführungsbeispiel ist die Hardwarekomponente aus Sicht des Anwenders einkanalig ausgeführt, so dass nur ein Prozessor-Kern Rechenergebnisse bereitstellen muss, die weiterverwendet werden, und der redundante Prozessor-Kern lediglich überprüft. Dabei kann ein Lock Step-Modus vorgesehen sein, also eine Betriebsart, bei welcher zwei CPU-Kerne nebeneinander koexistieren und dieselben Aufgaben abarbeiten, und am Ende einer jeden Aufgabe ein Vergleich der Ergebnisse erfolgt, um basierend auf dem Vergleich auswerten zu können, ob ein Sicherheitsproblem vorliegt oder nicht. Hierbei ist es nicht erforderlich, dass vollständige Redundanz vorliegt, insbesondere von Programmteil und Datenspeicherteil, sondern es ist ausreichend, dass ein zweiter CPU-Kern vorgesehen ist, welcher die Abarbeitung von Prozessorbefehlen des ersten CPU-Kerns überprüft.

Zur Lösung mindestens einer der genanten Aufgaben kann wie erwähnt auch von einem Verfahren gemäß dem Oberbegriff des Anspruchs 11 ausgegangen werden, bei welchem erfindungsgemäß das Laufzeitsystem in eine Laufzeitsystemstruktur integriert wird, welche mindestens dual ausgebildet ist und auf einem ersten und einem zweiten Laufzeitsystem basiert, wobei das erste Laufzeitsystem als ein sicheres und das zweite Laufzeitsystem als ein normales Laufzeitsystem ausgebildet ist, mit den Schritten:
- Abarbeiten von Aufgaben eines mittels des normalen Laufzeitsystems ablaufenden normalen Anwendungsprogramms in einer ersten Prioritätsebene;
- Abarbeiten von Aufgaben eines mittels des sicheren Laufzeitsystems ablaufenden sicheren Anwendungsprogramms in einer zweiten Prioritätsebene, die eine höhere Priorität aufweist als die erste Prioritätsebene, wobei das sichere Laufzeitsystems das normale Laufzeitsystems aktiviert; und
- Überwachen des Ablaufs des sicheren Laufzeitsystems durch eine in einer dritten Prioritätsebene mit höherer Priorität als die zweite Prioritätsebene vorgesehenen Überwachungskomponente, wobei das sichere Laufzeitsystems dazu ausgebildet ist, in einen oder einen von mehreren sicheren Betriebszuständen zu fahren, insbesondere sicherheitsrelevante Ausgänge abzuschalten.

Dabei kann bei einem Fehler eine Indikation ins AWP erfolgen und eine Reaktion aus dem AWP. Die Überwachungskomponente ist dazu vorgesehen, das sichere LZS zu überwachen. Es ist nicht erforderlich, dass das normale LZS direkt in Verbindung mit der Überwachungskomponente ist. Bei der Variante, eine Sicherheitsüberwachung durch Abschalten sicherheitsrelevanter Ausgänge sicherzustellen, kann der Zustand sicher bevorzugt dem Zustand stromlos entsprechen.

Hierdurch kann sichergestellt werden, dass das normale LZS jedenfalls dazu gezwungen werden kann, bei einem Sicherheitsproblem die Abarbeitung von normalen Aufgaben zu unterbinden.

Gemäß einem Ausführungsbeispiel können physikalische Ein- und/oder Ausgangsinformationen über Sensoren (z. B. von einem Öldruckdrucksensor) und/oder Aktoren (z. B. für ein Hydraulikventil) im sicheren Kontext erfasst und gelesen beziehungsweise geschrieben werden sowie auch über Schnittstellen (z. B. CAN, RS232 u. a.) im sicheren Kontext gelesen beziehungsweise geschrieben werden. Sichere Ein-/Ausgänge wie auch Schnittstellen mit sicherer Kommunikation können dabei dem sicheren AWP zugeordnet werden, und keinen besonderen Sicherheitsstandard erfordernde Ein-/Ausgänge und Schnittstellen können dem normalen AWP zugeordnet werden. Die jeweilige Zuordnung kann über Konfiguration oder Funktionen im AWP erfolgen. Das sichere AWP kann über einen gemeinsamen Speicher, insbesondere den oben erwähnten ersten Teil des Datenaustauschmittels, die dem normalen AWP zugeteilten
Eingangs- und Schnittstellendaten übermitteln und dort auch die entsprechenden Ausgangs- und Schnittstellendaten abholen beziehungsweise abrufen.

Ein rückwirkungsfreier Ablauf kann dadurch sichergestellt werden, dass die zuvor beschriebene Vorrichtung für einen Ablauf gemäß einem funktional sicheren Ablaufplan (so genannter Scheduler-Mechanismus) sorgt. Eine Systemüberwachung kann gemäß einer der möglichen Ausführungsformen die Einhaltung dieses Ablaufplans sicherstellen. Die Systemüberwachung ist gemäß einer der möglichen Ausführungsformen auf einer oberen Prioritätsebene vorgesehen. Dabei können z.B. sechs verschiedene Prioritätsebenen zur Verfügung gestellt werden, in denen Programmteile vergleichbar mit tasks ablaufen bzw. abgearbeitet werden können. In Verbindung mit einer normalen Hintergrundschleife mit einer in Bezug auf die Sicherheit niedrigen ersten Prioritätsebene läuft das normale AWP bevorzugt auf dieser Prioritätsebene oder einer zweiten Prioritätsebene ab. Für das sichere AWP können in Bezug auf die Sicherheit darauf aufbauende Prioritätsebenen zur Verfügung gestellt werden, insbesondere zwei, eine normale und eine darauf aufbauende privilegierte Ebene (Priorität 3 und 4). In der dritten Ebene kann ein sicheres Hintergrund-AWP vorgesehen sein, und in der vierten Ebene kann ein sicheres privilegiertes AWP vorgesehen sein.

Eine in einer weiteren Ebene mit noch höherer Priorität (Priorität 5) angeordnete Überwachungskomponente (so genannter Watch Dog) kann die max. Bearbeitungszeiten der einzelnen Prioritätsebenen überwachen und sicherstellen, dass das sichere AWP anforderungsgerecht und zyklisch bearbeitet wird. In einer weiteren, höchsten Prioritätsebene (Priorität 6) können Unterbrecherkomponenten (so genannte Hardware-Interrupts) angeordnet sein. Dabei kann von drei Prioritäts-Blöcken gesprochen werden, nämlich einem ersten Block mit der Hintergrundschleife und dem normalen AWP, einem zweiten Block mit dem sicheren AWP, und einem dritten Block mit den steuernden Komponenten Watch Dog und Interrupts, d.h., in dem dritten Block ist die Systemüberwachung vorgesehen.

Die Erfindung betrifft auch ein Computersystem für eine sicherheitskritische Anwendung in einer Maschinenumgebung, welches zur Ablaufsteuerung von Anwendungsprogrammen auf Basis einer Laufzeitsystemstruktur ausgebildet ist, wobei das Computersystem umfasst:
- eine Empfangseinrichtung zur Eingabe von Befehlen;
- eine Verarbeitungsumgebung, welche auf einer einzigen Hardwarekomponente integriert ist und eine Vorrichtung nach einem der Ansprüche 1 bis 10 aufweist; und
- eine Ausgabeeinrichtung, welche zur Ausgabe von Information ausgebildet ist.

Das Computersystem kann mindestens ein Speichermedium aufweisen, in welches ein Computerprogramm für eine Vorrichtung nach einem der Ansprüche 1 bis 10 geladen sein kann.

Es sei erwähnt, dass die genannten Ausführungsbeispiele grundsätzlich miteinander kombinierbar sind, wenn nicht explizit das Gegenteil angegeben ist.

In den nachfolgenden Zeichnungsfiguren wird die Erfindung noch näher erläutert. Es zeigen
- Figur 1: eine Speicher- und Funktionsaufteilung gemäß einem Ausführungsbeispiel der Erfindung;
- Figur 2a: die verschiedenen (Sicherheits-)Rangstufen bei einer Vorrichtung und einem Verfahren gemäß einem Ausführungsbeispiel der Erfindung;
- Figur 2b: die verschiedenen Rangstufen bei einer Vorrichtung und einem Verfahren gemäß einem weiteren Ausführungsbeispiel der Erfindung;
- Figur 2c: die verschiedenen Rangstufen bei einer Vorrichtung und einem Verfahren gemäß noch einem weiteren Ausführungsbeispiel der Erfindung;
- Figur 3: ein Modell für eine Kommunikation gemäß einem ersten Ausführungsbeispiel der Erfindung, wobei der Fluss von Ein- und Ausgangsinformationen für ein sicheres und ein normales AWP dargestellt ist;
- Figur 4: ein Modell für eine Kommunikation gemäß einem zweiten Ausführungsbeispiel der Erfindung, wobei der Fluss von Ein- und Ausgangsinformationen für ein sicheres und ein normales AWP dargestellt ist;
- Figur 5: einen schematischen Aufbau einer Hardwarearchitektur bzw. einer Laufzeitsystemstruktur gemäß einem Ausführungsbeispiel der Erfindung, wobei beispielhaft zwei Pfade dargestellt sind, über welche ein Austausch von Daten zwischen der Hardwareebene und dem normalen bzw. sicheren AWP erfolgen kann;
- Figur 6: eine schematische Skizze einer Anordnung von zwei CPU-Kernen in Bezug auf weitere Komponenten, so dass in einem Lock step-Modus eine Zweikanaligkeit simuliert werden kann; und
- Figur 7: eine schematische Skizze eines durch einen Überwachungsbaustein und/oder einen Schutzbaustein abgeschotteten Speicherbereichs.

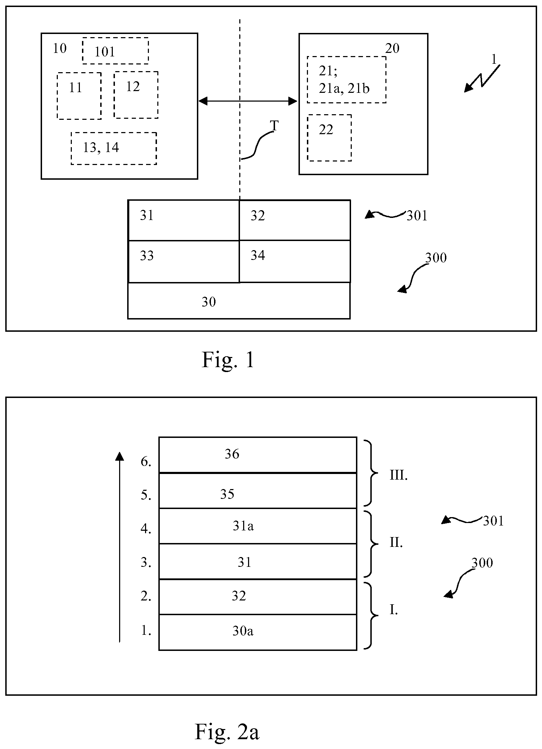

In der Figur 1 ist eine Vorrichtung 1 für eine sicherheitskritische Anwendung gezeigt, mit einer zentralen Recheneinheit 10, welche einen Überwachungsbaustein 11 und/oder einen Schutzbaustein 14 aufweist, und welche in Kommunikation mit einem Mikrocontroller 101 sowie einem ersten Speicherbaustein 12 und einem zweiten Speicherbaustein 13 ist bzw. diese Komponenten aufweist. Die zentrale Recheneinheit 10 ist in Kommunikation mit Speichermitteln 20, welche ein Datenaustauschmittel 21 und einen Speicherbereich 22 umfassen. Ferner ist eine Hardwarekomponente 30 dargestellt, welche in Verbindung steht mit einem sicheren Laufzeitsystem (LZS) 33 und einem sicheren Anwendungsprogramm (AWP) 31 sowie einem normalen Laufzeitsystem (LZS) 34 und einem normalen Anwendungsprogramm (AWP) 32, bzw. diese Komponenten aufweist. Der gezeigte Aufbau ist Teil der Hardwarearchitektur 300 bzw. der Laufzeitsystemstruktur 301. In der Fig. 1 ist eine Trennebene T angedeutet, welche zwischen dem normalen LZS 34 bzw. AWP 32 und dem sicheren LZS 33 bzw. AWP 31 verläuft. Die Hardwarekomponente 30 selbst ist beidseitig der Trennebene T vorgesehen, d.h., die Trennebene T durchzieht die Hardwarekomponente 30. Die Trennebene ist eher eine logische Trennebene als eine physikalische. D.h., die Art der Realisierung in Hardware steht nicht im Vordergrund, um die Sicherheit der Funktionalität sicherzustellen. Die Trennebene kann insbesondere durch unterschiedliche Speicherbausteine gegeben sein. Sie kann aber auch nur in logischer Hinsicht gebildet sein, insbesondere wenn alle Speicherbereiche in einem Speicher vereint sind. Ist die Trennebene logischer Art, dann kann die Trennung bzw. Rückwirkungsfreiheit insbesondere über den Überwachungsbaustein und/oder Schutzbaustein, insbesondere MMU und/oder MPU realisiert werden, welche Speicherbereiche voneinander abschotten können, unabhängig davon ob die Speicherbereiche in einem oder in verschiedenen physikalischen Speichern vorliegen. Mit anderen Worten können MMU und/oder MPU bildlich gesprochen durch Abschottung von Speicherbereichen für eine Trennebene sorgen, wohingegen die Systemüberwachung einzelne Prozesse voneinander trennt und deren richtigen Ablauf überwacht. Dabei können MMU und/oder MPU unabhängig von irgendwelchen Prioritätsebenen betrachtet werden, da sie nicht notwendigerweise in Prozesse eingreifen müssen.

Ein Abschotten von Speicherbereichen kann insbesondere darüber erfolgen, dass die MMU bzw. MPU einer adresserzeugenden Logik vorgeschaltet sind. Erfolgt ein Kontextwechsel, also ein Übergang vom sicheren AWP zum normalen AWP oder umgekehrt, dann kann der Schutz bzw. die Sicherheit im sicheren AWP durch Zuweisung geeigneter Anfangs- und Endadressen sichergestellt werden.

Es ist zu erwähnen, dass die Komponenten erster Speicherbaustein 12 und zweiter Speicherbaustein 13 auch im Speichermittel 20 vorgesehen sein können. Maßnahmen zur funktionellen Sicherheit brauchen aber grundsätzlich von den Komponenten Speichermittel 20 und Datenaustauschmittel 21 nicht unterstützt werden.

Auch ist zu erwähnen, dass grundsätzlich in fünf oder mehr, insbesondere neun, unterschiedliche Speicherbereiche unterschieden werden kann: zum einen in einen Programmspeicherbereich, welcher in einen sicheren und einen normalen Programmspeicherbereich unterteilt ist, die jeweils weiter in einen Bereich mit Bezug zum AWP und einen Bereich mit Bezug zum LZS unterteilt sind, zum anderen einem Arbeitsspeicherbereich, unterteilt mit einen Bereich mit Bezug zum AWP und einen Bereich mit Bezug zum LZS, und schließlich auch mit einer so genannten shared memory.

In der Figur 2a ist gezeigt, auf welche Weise einzelne Komponenten der erfindungsgemäßen Vorrichtung in unterschiedlichen Prioritätsebenen 1. bis 6. angeordnet werden können, um einen rückwirkungsfreien Ablauf sicherzustellen. In Verbindung mit einer normalen Hintergrundschleife 30a in einer in Bezug auf die Sicherheit niedrigen ersten Prioritätsebene 1. läuft das normale AWP 32 auf dieser Prioritätsebene oder einer zweiten Prioritätsebene 2. ab. Die Hintergrundschleife 30a ist dabei ohne Zeitanforderung. Für das sichere AWP 31, 31a können in Bezug auf die Sicherheit darauf aufbauende Prioritätsebenen 3., 4. zur Verfügung gestellt werden, insbesondere zwei, eine normale (3.) und eine darauf aufbauende privilegierte Ebene (Priorität 3 und 4). In der dritten Ebene 3. kann ein sicheres Hintergrund-AWP 31 vorgesehen sein, und in der vierten Ebene kann ein sicheres privilegiertes AWP 31 a vorgesehen sein.

Eine in einer weiteren Ebene mit noch höherer Priorität (Priorität 5) angeordnete Überwachungskomponente 35 (so genannter Watch Dog) kann die max. Bearbeitungszeiten der einzelnen Prioritätsebenen überwachen und sicherstellen, dass das sichere AWP 31, 31 a anforderungsgerecht und zyklisch bearbeitet wird. Dabei können die Ebenen 2 bis 5 als vier task timer aufgefasst werden, welche durch den Mikrocontroller bzw. die Struktur des Mikrocontrollers zur Verfügung gestellt werden. Mit anderen Worten können die timer in Verbindung mit dem Mikrocontroller als Betriebssystem-Ersatz genutzt werden und unterschiedliche task-Ebenen ohne Betriebssystem bereitgestellt werden, insbesondere in Abhängigkeit der Struktur eines jeweiligen Mikrocontrollers. In einer weiteren, höchsten Prioritätsebene (Priorität 6) können Unterbrecherkomponenten 36 (so genannte Hardware-Interrupts, insbesondere time interrupts) angeordnet sein. In dieser sechsten Ebene können z.B. ankommende Nachrichten abgearbeitet werden.

Somit kann von drei Prioritäts-Blöcken I., II., III. gesprochen werden, nämlich einem ersten Block I. mit der Hintergrundschleife 30a und dem normalen AWP 32, einem zweiten Block II. mit dem sicheren AWP 31, 31a, und einem dritten Block III. mit den steuernden Komponenten Watch Dog 35 und Interrupts 36, d.h., in dem dritten Block ist eine Systemüberwachung vorgesehen bzw. der dritte Block wird durch eine Systemüberwachung gebildet. Der gezeigte Aufbau ist Teil der Hardwarearchitektur 300 bzw. der Laufzeitsystemstruktur 301, bei welcher unterschiedliche Sicherheitsniveaus nebeneinander vorgesehen sein können.

Das in der Fig. 2a gezeigte Beispiel einer Architektur 300 bzw. Laufzeitsystemstruktur 301 ist eines von mehreren möglichen Beispielen. Es ist zu erwähnen, dass der gezeigte Aufbau der Ebenen bzw. deren Anzahl variieren kann, insbesondere in Abhängigkeit von technischen Eigenschaften eines jeweils verwendeten Mikrocontrollers. Dabei erscheinen zwischen zwei und fünf Prioritätsebenen für normale Anwendungen zweckdienlich, aber es können auch deutlich mehr Prioritätsebenen mit jeweils abgestuftem Sicherheitsniveau vorgesehen sein. In der Fig. 2a sind drei bzw. vier sicherheitsgestufte Ebenen gezeigt: Ebene 3, 4 und 5 bzw. 1, 3, 4 und 5, je nachdem ob die Hintergrundschleife 30a als sicherheitsrelevant eingestuft ist. Wahlweise kann gemäß einer Variante auch das sichere AWP bereits in der Ebene der Hintergrundschleife vorgesehen sein. Es sei angemerkt, dass die Zuordnung zu einzelnen Prioritätsebenen dabei grundsätzlich frei wählbar ist. Wahlweise ist es in Abwandlung dieses Ausführungsbeispiels z.B. möglich, Aufgaben nur auf zwei sicherheitsgestuften Ebenen, z.B. den Ebenen 3 und 4 zu bearbeiten, und nicht in der Ebene 2.

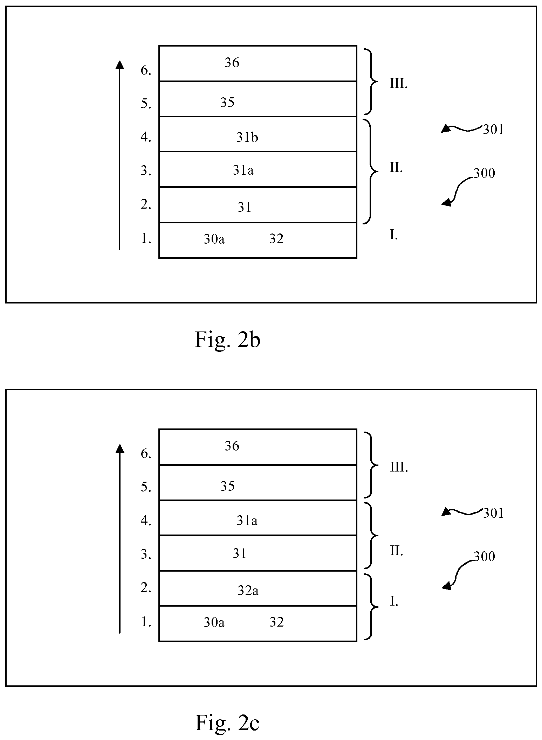

In der Figur 2b ist eine Variante der in Fig. 2a gezeigten Architektur gezeigt, bei welcher in der ersten Prioritätsebene neben der Hintergrundschleife 30a auch das normale AWP 32 vorgesehen ist, und das sichere AWP 31 ist in der zweiten Prioritätsebene vorgesehen und ein bzw. das privilegierte sichere AWP 31 a ist in der dritten Prioritätsebene vorgesehen, wobei bei der dritten Prioritätsebene für das privilegierte sichere AWP auch von einer Ablaufebene für schnellere tasks des sicheren LZS 33 gesprochen werden kann. Die vierte Prioritätsebene ist ebenfalls als weitere Ablaufebene für schnellere tasks des sicheren LZS 33 ausgebildet, so dass bei dieser Variante drei Ebenen unterschiedlicher Priorität für das sichere LZS vorgesehen sind. Dadurch ist der zweite Block II. für tasks im Zusammenhang mit dem sicheren AWP 31 bzw. Ablaufebenen 31a, 31b für schnellere tasks des sicheren LZS 33 über drei Prioritätsebenen vorgesehen.

In der Figur 2c ist eine weitere Variante der in Fig. 2a gezeigten Architektur gezeigt, bei welcher in der ersten Prioritätsebene neben der Hintergrundschleife 30a auch das normale AWP 32 vorgesehen ist, und ein privilegiertes normales AWP 32a ist in der zweiten Prioritätsebene vorgesehen, und das sichere AWP 31 ist in der dritten Prioritätsebene vorgesehen und ein bzw. das privilegierte sichere AWP 31 a ist in der vierten Prioritätsebene vorgesehen, wobei bei der zweiten Prioritätsebene für das privilegierte normale AWP 32a auch von einer Ablaufebene für schnellere tasks des normalen LZS 34 gesprochen werden kann. Die vierte Prioritätsebene ist als weitere Ablaufebene für schnellere tasks des sicheren LZS 33 ausgebildet. Dadurch ist der zweite Block II. für tasks im Zusammenhang mit dem sicheren AWP 31 bzw. der Ablaufebenen 31a für schnellere tasks des sicheren LZS 33 wie im Fall der Fig. 2a über zwei Prioritätsebenen vorgesehen.

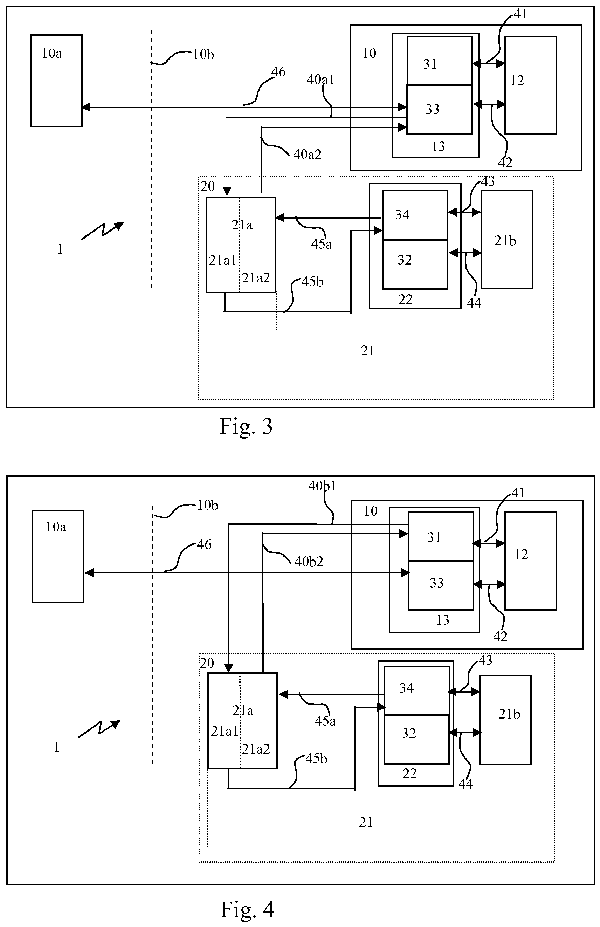

In den Figuren 3 und 4 sind beispielhaft zwei Modelle dargestellt, wie der Austausch von Ein- und/oder Ausgangsinformationen zwischen einem sicheren AWP und einem normalen AWP ablaufen kann, wobei der Datenaustausch entweder über das sichere LZS 33 des sicheren AWP 31 oder über das sichere AWP 31 selbst ausgeführt werden kann. Dabei ist jeweils ein Kommunikationsbaustein 10a angedeutet, welcher über eine Schnittstelle 10b in Verbindung mit einer zentralen Recheneinheit (CPU) 10 ist.

In der Fig. 3 ist ein erster On-Board-RAM-Baustein 21 a dargestellt, welcher eine Funktion als gemeinsamer Speicher (shared memory) übernehmen kann. Ferner ist ein zweiter On-Board-RAM-Baustein 21b dargestellt, welcher eine Funktion zur Abbildung normaler Eingabe- und/oder Ausgabeinformationen übernehmen kann. Ferner ist ein On-Chip-RAM-Baustein 12 dargestellt, welcher eine Funktion zur Abbildung sicherer Eingabe- und/oder Ausgabeinformationen übernehmen kann.

In der Fig. 3 ist dargestellt, dass physikalische Ein- und/oder Ausgangsinformationen über Sensoren (z. B. von einem Öldruckdrucksensor) beziehungsweise Aktoren (z. B. für ein Hydraulikventil) wie auch über Schnittstellen (z. B. CAN, RS232 u. a.) ausschließlich im sicheren Kontext gelesen beziehungsweise geschrieben werden. Sichere Ein-/Ausgänge wie auch Schnittstellen mit sicherer Kommunikation werden dabei dem sicheren AWP 31 zugeordnet, übrige Ein-/Ausgänge wie auch übrige Schnittstellen werden dem normalen AWP 32 zugeordnet. Die jeweilige Zuordnung erfolgt entweder über Konfiguration und/oder über Funktionen im AWP selbst.

Das sichere AWP 31 übermittelt über einen dem On-Board-RAM-Baustein 21 zuzuordnenden gemeinsamen Speicher (shared memory-Bereich) 21a die dem normalen AWP 32 zugeteilten Eingangs- und Schnittstellendaten und holt dort auch die entsprechenden Ausgangs- und Schnittstellendaten ab.

In der Fig. 4 ist analog zur Fig. 3 ein erster On-Board-RAM-Baustein 21 a dargestellt, welcher eine Funktion als gemeinsamer Speicher (shared memory) übernehmen kann. Ferner ist ein zweiter On-Board-RAM-Baustein 21b dargestellt, welcher eine Funktion zur Abbildung normaler Eingabe- und/oder Ausgabeinformationen übernehmen kann. Ferner ist ein On-Chip-RAM-Baustein 12 dargestellt, welcher eine Funktion zur Abbildung sicherer Eingabe- und/oder Ausgabeinformationen übernehmen kann.

In den Fig. 3 und 4 sind ferner Kommunikationswege 40a1, 40a2 zwischen dem ersten Teil 21a des Datenaustauschmittels und dem sicheren LZS 33 sowie Kommunikationswege 40b1, 40b2 zwischen dem ersten Teil 21a des Datenaustauschmittels 21 und dem sicheren AWP 31 angedeutet. Dabei besteht eine Verbindung vom dem sicheren LZS 33 zu dem normalen LZS 34 über einen ersten Bereich 21a1 des ersten Teils des Datenaustauschmittels, und eine Verbindung vom dem normalen LZS 34 zu dem sicheren LZS 33 über einen zweiten Bereich 21a2 des ersten Teils des Datenaustauschmittels.

Die Kommunikationswege 40a1, 40a2, 40b1, 40b2 können z.B. über Parallel-Interface, PCI, SPI oder andere gängige Prozessor-Schnittstellen erschlossen werden. Vom Mikrocontroller kann dabei ein direkter Speicherzugriff auf das Datenaustauschmittel 21 erfolgen. Die Zugriffe können aus verschiedenen Softwareebenen veranlasst werden, doch in beiden Fällen, also sowohl beim Datenaustausch über die Kommunikationswege 40a1, 40a2 als auch beim Datenaustausch über die Kommunikationswege 40b1, 40b2 können die Zugriffe vom sicheren LZS ausgeführt bzw. veranlasst werden. Auch ist eine fünfte Verbindung 45a in Richtung des Datenaustauschmittels 21 bzw. die fünfte Verbindung 45b in Richtung des normalen LZS angedeutet. Es ist zu erwähnen, dass der erste Speicherbaustein 12 und das bzw. die Datenaustauschmittel 21 nicht notwendigerweise unterschiedliche Speicher sein müssen. Wahlweise können sie als Teil eines einzigen physikalischen Speichers vorliegen.

Ferner sind eine erste bis sechste Verbindung 41, 42, 43, 44, 45a, 45b und 46 angedeutet, welche z.B. über Parallel-Interface, PCI, SPI oder andere gängige Schnittstellen hergestellt werden können. Speziell die Verbindung 46 kann z.B. ein parallel port, ein A/D-Wandler oder eine CAN-BUS Schnittstelle sein.

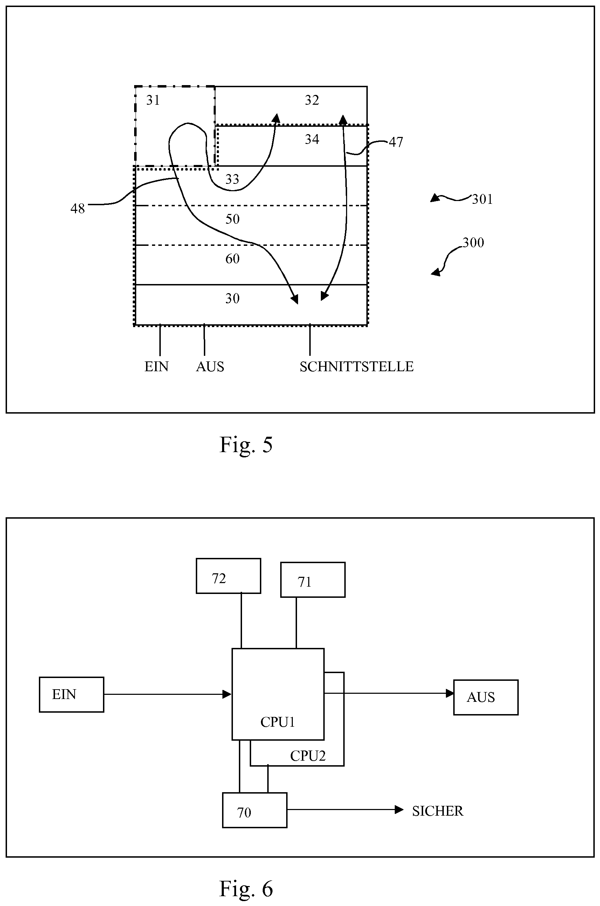

In der Fig. 5 ist schematisch veranschaulicht, wie die LZS und AWP miteinander in Verbindung stehen können. Eine Hardwarekomponente 30 ist als Basis vorgesehen, die z.B. mit einem Eingang (Ein), einem Ausgang (Aus) und einem Interface (Schnittstelle) ausgebildet ist. Zwischen einem sicheren LZS 33 und der Hardwarekomponente 30 ist ein so genannter low level Treiber 60 (low level driver) vorgesehen. Das sichere LZS 33 interagiert mit diesem Treiber 60, weshalb zwischen sicherem LZS 33 und Treiber 60 eine Strichlinie angedeutet ist. Wahlweise kann, wie dargestellt, zwischen sicherem LZS 33 und Treiber 60 ein sicheres Betriebssystem 50 vorgesehen sein, welches ebenfalls mit dem sicheren LZS 33 bzw. dem Treiber 60 interagieren kann (Strichlinie). An das sichere LZS 33 schließt ein normales LZS 34 an. Strenggenommen interagiert allein das sichere LZS 33 mit der Hardwarekomponente 30.

Die soeben aufgeführten Komponenten können zusammen zertifiziert werden, weshalb sie als zertifizierbares Paket mit einer Punktlinie umrandet dargestellt sind, wobei es Aufgabe des Herstellers bzw. Anbieters von Steuerungen ist, die Zertifizierung zu erreichen. An das normale LZS 34 schließt ein normales AWP 32 an, welches ein Kunde nicht zu zertifizieren braucht. An das sichere LZS 33 schließt auch ein sicheres AWP 31 an, wobei es Aufgabe des Kunden ist, dessen Zertifizierung zu erreichen.

Das normale LZS 34 sowie das sichere LZS 33 können z.B. von einem Systemlieferanten als getrennte Komponenten bereitgestellt werden, wenn es sich um herkömmliche auf dem Markt erhältliche normale bzw. sichere LZS handeln darf. Die Hardwarekomponente 30 in Verbindung mit dem Treiber 60 und wahlweise auch in Verbindung mit einem Betriebssystem 50 hingegen obliegt dem Anbieter der Steuerung. Auch die zweckdienliche Verknüpfung des normalen LZS 34 mit dem sicheren LZS 33 obliegt dem Anbieter der Steuerung, und hierin ist ein besonderer Schwerpunkt zu sehen, denn auch durch die Verknüpfung des normalen LZS 34 mit dem sicheren LZS 33 kann einem Kunden der Vorteil verschafft werden, allein das sichere AWP 31 (einmalig) zertifizieren zu müssen. Das normale AWP 32 kann vom Kunden in weitem Rahmen verändert werden. Dabei hat das sichere LZS 33 bildlich gesprochen alle Prozesse in der Hand, und kann insbesondere durch Zuweisung der weiteren Komponenten zu unterschiedlich hohen Prioritätsebenen das Zusammenspiel der Komponenten beim Datenaustausch steuern. Das sichere LZS 33 kann auch die Schnittstelle nach außen bereitstellen.

In der Fig. 5 sind ferner beispielhaft zwei Pfade für einen Datenaustausch einskizziert, nämlich ein erster Pfad 47 und ein zweiter Pfad 48. Im ersten Fall wird über den Pfad 47 ausgehend von der Hardwarekomponente 30 vom sicheren LZS 33 direkt zum normalen AWP 32 geroutet bzw. weitergeleitet und in umgekehrter Richtung auch. Dabei kann ein gemeinsamer Speicher (shared memory) LZS genutzt werden. Im zweiten Fall wird über den Pfad 48 Information, die das normale AWP 32 benötigt, ausgehend von der Hardwarekomponente 30 vom sicheren LZS 33 über das normale LZS 34 zum normalen AWP 32 geroutet bzw. weitergeleitet und in umgekehrter Richtung auch, insbesondere über das sichere AWP 31. Dabei kann ein gemeinsamer Speicher (shared memory) AWP genutzt werden.

In der Fig. 6 ist skizzenhaft erläutert, wie durch einen Lock step-Modus eine Zweikanaligkeit simuliert werden kann, ohne alle Komponenten redundant ausführen zu müssen. Neben einem ersten CPU-Kern (CPU1) ist ein zweiter CPU-Kern (CPU2) vorgesehen, Eingangsdaten (EIN) werden von beiden CPU-Kernen bearbeitet und deren Ergebnis von einem Vergleicher 70 überprüft, wobei nur einmal Ausgangsdaten (AUS) erzeugt werden und nur ein Datenspeicherteil 71 und ein Programmteil 72 genutzt werden. Stellt der Vergleicher 70 eine Abweichung fest, so wird in den sicheren bzw. einen von mehreren unterschiedlich sicher gestuften Betriebszuständen geschaltet (SICHER), entsprechend einem fail safe-Zustand.

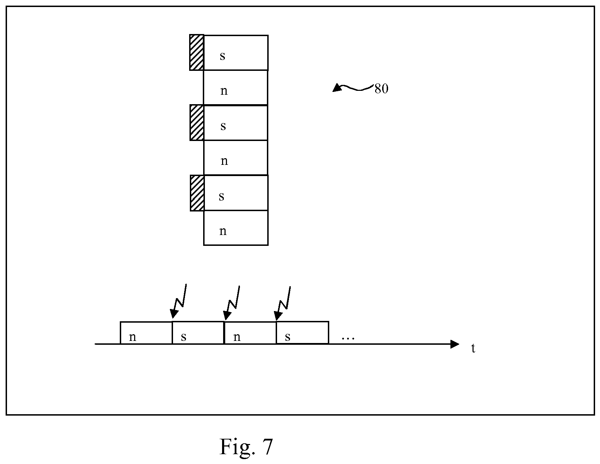

In der Fig. 7 ist eine schematische Skizze eines durch einen Überwachungsbaustein und/oder einen Schutzbaustein, insbesondere MMU und/oder MPU abgeschotteten Speicherbereichs 80, welcher sichere Bereiche (s) und normale Bereiche (n) aufweist, wobei auf einer Zeitachse t der Wechsel von einem sicheren in einen normalen Bereich dargestellt ist, nämlich bei den Pfeilen am Übergang vom sicheren Speicherbereich (s) in den normalen Speicherbereich (n) und umgekehrt, wobei die Pfeile einen Kontextwechsel anzeigen. Bei einem Kontextwechsel kann durch MMU und/oder MPU eine Blockierung der sicheren Bereiche (s) erfolgen, was durch die gestrichelten Rechtecke veranschaulicht ist. Hierdurch kann ein Zugriff auf sichere Bereiche (s) ausgeschlossen werden. Ebenso kann die Blockierung erfolgen, wenn die gesamte Steuerung in den sicheren oder einen speziellen sicheren Betriebszustand gebracht werden soll.

### Bezugszeichenliste

- 1: Vorrichtung für eine sicherheitskritische Anwendung
- 10: zentrale Recheneinheit (CPU)
- 101: Mikrocontroller
- 10a: Kommunikationsbaustein
- 10b: Schnittstelle
- 11: Überwachungsbaustein, insb. Speicherverwaltungseinheit (MMU)
- 12: erster Speicherbaustein, insbesondere integrierter Arbeitsspeicherbaustein (On-Chip-RAM-Baustein)
- 13: zweiter Speicherbaustein, insbesondere integrierter Flashspeicherbaustein (On-Chip-Flash-Baustein)
- 14: Schutzbaustein, insb. Speicherschutzeinheit (MPU)

- 20: Speichermittel
- 21: Datenaustauschmittel, insb. zweiteiliges Datenaustauschmittel, insb. zweiteiliger On-Board-RAM-Baustein
- 21a: erster Teil des Datenaustauschmittels, insb. On-Board-RAM-Baustein, der als gemeinsamer Speicher, also als so genannte shared memory ausgebildet sein kann;
- 21a1: erster Bereich des ersten Teils des Datenaustauschmittels
- 21a2: zweiter Bereich des ersten Teils des Datenaustauschmittels
- 21b: zweiter Teil des Datenaustauschmittels, insb. On-Board-RAM-Baustein
- 22: Speicherbereich, insb. On-Board-Flash-Baustein

- 30: Hardwarekomponente
- 30a: Hintergrundschleife
- 300: Hardwarearchitektur
- 301: Laufzeitsystemstruktur
- 31: erstes, sicheres Anwendungsprogramm (AWP)
- 31a: privilegiertes sicheres AWP bzw. Ablaufebene für schnellere tasks des sicheren LZS
- 31b: weitere Ablaufebene für schnellere tasks des sicheren LZS
- 32: zweites, normales AWP
- 32a: privilegiertes normales AWP bzw. Ablaufebene für schnellere tasks des normalen LZS
- 33: erstes, sicheres Laufzeitsystem (LZS)
- 34: zweites, normales LZS
- 35: Überwachungskomponente (so genannte Watch Dog)
- 36: Unterbrecherkomponente (so genannte Interrupt)

- 40a1: erster Kommunikationsweg zwischen dem erster Teil 21a des Datenaustauschmittels und dem sicheren LZS 33
- 40a2: zweiter Kommunikationsweg zwischen dem erster Teil 21a des Datenaustauschmittels und dem sicheren LZS 33

- 40b1: erster Kommunikationsweg zwischen dem erster Teil 21 a des Datenaustauschmittels und dem und sicherem AWP 31
- 40b2: zweiter Kommunikationsweg zwischen dem erster Teil 21a des Datenaustauschmittels und dem und sicherem AWP 31

- 41: erste Verbindung bzw. Kommunikationsweg
- 42: zweite Verbindung bzw. Kommunikationsweg
- 43: dritte Verbindung bzw. Kommunikationsweg
- 44: vierte Verbindung bzw. Kommunikationsweg
- 45a: fünfte Verbindung / Kommunikationsweg in Richtung Datenaustauschmittel
- 45b: fünfte Verbindung / Kommunikationsweg in Richtung normales LZS
- 46: sechste Verbindung bzw. Kommunikationsweg
- 47: erster beispielhafter Pfad für einen Datenaustausch
- 48: zweiter beispielhafter Pfad für einen Datenaustausch
- 50: Betriebssystem

- 60: low level Treiber

- 70: Vergleicher
- 71: Datenspeicherteil
- 72: Programmteil

- 80: abgeschotteter Speicherbereich

- I.: erster Prioritäts-Block, insbesondere mit Prioritätsebene 1 und 2 in Fig. 2a und 2c, bzw. Prioritätsebene 1 in Fig. 2b
- II.: zweiter Prioritäts-Block, insbesondere mit Prioritätsebene 3 und 4 in Fig. 2a und 2c, bzw. Prioritätsebenen 2, 3, und 4 in Fig. 2b
- III.: dritter Prioritäts-Block, insbesondere mit Prioritätsebene 5 und 6
- 1.-6.: erste bis sechste Prioritätsebene

- T: Trennebene

## Patentansprüche

1. Vorrichtung (1) für eine ablauf- oder prozesssicherheitskritische Anwendung in einer frei programmierbaren elektronischen Steuerung einer Maschinenumgebung, die einen Computer aufweist und zur Ablaufsteuerung von Anwendungsprogrammen (31, 32) auf Basis eines Laufzeitsystems (33, 34) ausgebildet ist, mit:
- einer Hardwarekomponente (30), in welche das Laufzeitsystem (33, 34) integriert ist;
- einer zentralen Recheneinheit (10), welche einen Mikrocontroller (101) mit einem Überwachungsbaustein (11) und/oder einem Schutzbaustein (14) sowie einen ersten Speicherbereich (12) und einen zweiten Speicherbereich (13) aufweist; und
- Speichermitteln (20), welche in Verbindung mit der zentralen Recheneinheit (10) sind,
wobei das Laufzeitsystem (33, 34) Bestandteil einer Laufzeitsystemstruktur (301) in Form eines Computerprogramms ist, welche mindestens dual ausgebildet ist und auf einem ersten (33) und einem zweiten (34) Laufzeitsystem basiert, wobei das erste Laufzeitsystem (33) als ein sicheres und das zweite Laufzeitsystem (34) als ein normales Laufzeitsystem ausgebildet ist, wobei unter einem sicheren Laufzeitsystem ein Laufzeitsystem zu verstehen ist, bei welchem eine Überprüfung durch das Laufzeitsystem selbst erfolgt, und wobei ein normales Laufzeitsystem diese Fähigkeit nicht aufweist, wobei die Laufzeitsystemstruktur (301) eine Struktur oder Umgebung für ein Laufzeitsystem (33, 34) darstellt, bei der es möglich ist, ein einzelnes Laufzeitsystem (33, 34) so in die Maschinenumgebung zu integrieren, dass ein normales Anwendungsprogramm (32) sowie ein sicheres Anwendungsprogramm (31) auf dem Computer der Maschinenumgebung lauffähig sind,
wobei zur Erzeugung unterschiedlicher Prioritätsebenen ein Betriebssystem oder ein Betriebssystem-Ersatz, bei dem Timer der zentralen Recheneinheit (10) zur Bereitstellung der unterschiedlichen Prioritätsebenen genutzt werden, vorgesehen ist, und
wobei das sichere Anwendungsprogramm (31) und das normale Anwendungsprogramm (32) nebeneinander ablaufen und einen Einfluss des normalen Anwendungsprogramms (32) auf das sichere Anwendungsprogramm (31) ausgeschlossen wird, indem durch eine Systemüberwachung dem sicheren Laufzeitsystem (33) gegenüber dem normalen Laufzeitsystem (34) eine Priorität eingeräumt wird.

2. Vorrichtung nach Anspruch 1, **dadurch gekennzeichnet, dass** das erste Laufzeitsystem (33) für den Ablauf eines ersten Anwendungsprogramms (31) vorgesehen ist und das zweite Laufzeitsystem (34) für den Ablauf eines zweiten Anwendungsprogramms (32) vorgesehen ist, wobei beide Anwendungsprogramme (31, 32) in die Hardwarekomponente (30) integriert sind.

3. Vorrichtung nach Anspruch 1, **dadurch gekennzeichnet, dass** das erste, sichere Anwendungsprogramm (31) dazu ausgebildet ist, im zweiten Speicherbereich (13) zu laufen unter Nutzung des ersten Speicherbereich (12) als Arbeitsspeicher.

4. Vorrichtung nach Anspruch 1 oder 3, **dadurch gekennzeichnet, dass** die Speichermittel (20) ein Datenaustauschmittel (21) und einen Speicherbereich (22) aufweisen, und dass das zweite, normale Anwendungsprogramm (32) dazu ausgebildet ist, in dem Speicherbereich (22) zu laufen unter Nutzung des Datenaustauschmittels (21) als Arbeitsspeicher.

5. Vorrichtung nach einem der vorhergehenden Ansprüche 1 bis 4, **dadurch gekennzeichnet, dass** die Speichermittel (20) ein Datenaustauschmittel (21) aufweisen, welches als zweiteiliges Datenaustauschmittel mit einem ersten (21a) und einem zweiten Teil (21b) ausgeführt ist, wobei der erste Teil (21a) als gemeinsamer Speicher ausgebildet ist, und das zweite Laufzeitsystem (34) ist über den gemeinsamen Speicher (21 a) in Verbindung mit dem ersten Anwendungsprogramm (31) oder dem ersten Laufzeitsystem (33).

6. Vorrichtung nach Anspruch 5, **dadurch gekennzeichnet, dass** das zweite Laufzeitsystem (34) und das zweite Anwendungsprogramm (32) mit dem zweiten Speicherbereich (13) in Verbindung stehen.

7. Vorrichtung nach Anspruch 5, **dadurch gekennzeichnet, dass** die Speichermittel (20) ein Datenaustauschmittel (21) und einen Speicherbereich (22) aufweisen, und dass das erste Laufzeitsystem (33) und das erste Anwendungsprogramm (31) mit dem Speicherbereich (22) in Verbindung stehen.

8. Vorrichtung (1) nach einem der vorhergehenden Ansprüche 1 bis 7, **dadurch gekennzeichnet, dass** die Vorrichtung (1) dazu ausgebildet ist, eine Ablaufsteuerung in Abhängigkeit von sechs Prioritätsebenen mit zunehmender Priorität vorzunehmen, wobei in einer ersten Ebene mit niedrigster Priorität eine Hintergrundschleife (30a) vorgesehen ist und in einer zweiten Ebene mit höherer Priorität das zweite Anwendungsprogramm (32) vorgesehen ist, und wobei das erste Anwendungsprogramm (31) in einer dritten und/oder vierten Ebene mit jeweils höherer Priorität vorgesehen ist.

9. Vorrichtung nach Anspruch 8, **dadurch gekennzeichnet, dass** in einer Ebene mit zweithöchster Priorität eine Überwachungskomponente (35) vorgesehen ist und in einer Ebene mit höchster Priorität eine Unterbrecherkomponente (36) vorgesehen ist.

10. Vorrichtung nach Anspruch 1, **dadurch gekennzeichnet, dass** der erste Speicherbereich (12) ein erster Speicherbaustein und der zweite Speicherbereich (13) ein zweiter Speicherbaustein ist.

11. Verfahren zur Ablaufsteuerung von sicherheitskritischen Anwendungsprogrammen auf Basis eines Laufzeitsystems (33, 34) in einer Maschinenumgebung mittels einer Vorrichtung nach einem der Ansprüche 1 bis 10, **dadurch gekennzeichnet, dass** das Laufzeitsystem (33, 34) in eine Laufzeitsystemstruktur (301) integriert wird, welche mindestens dual ausgebildet ist und auf einem ersten (33) und einem zweiten (34) Laufzeitsystem basiert, wobei das erste Laufzeitsystem (33) als ein sicheres und das zweite Laufzeitsystem (34) als ein normales Laufzeitsystem ausgebildet ist, wobei unter einem sicheren Laufzeitsystem ein Laufzeitsystem zu verstehen ist, bei welchem eine Überprüfung durch das Laufzeitsystem selbst erfolgt, und wobei ein normales Laufzeitsystem diese Fähigkeit nicht aufweist, mit den Schritten:
- Abarbeiten von Aufgaben eines mittels des normalen Laufzeitsystems (34) ablaufenden normalen Anwendungsprogramms (32) in einer ersten Prioritätsebene;
- Abarbeiten von Aufgaben eines mittels des sicheren Laufzeitsystems (33) ablaufenden sicheren Anwendungsprogramms (31) in einer zweiten Prioritätsebene, die eine höhere Priorität aufweist als die erste Prioritätsebene, wobei das sichere Laufzeitsystems (33) das normale Laufzeitsystems (34) aktiviert; und
- Überwachen des Ablaufs des sicheren Laufzeitsystems (33) durch eine in einer dritten Prioritätsebene mit höherer Priorität als die zweite Prioritätsebene vorgesehenen Überwachungskomponente (35), wobei das sichere Laufzeitsystems (33) dazu ausgebildet ist, in einen oder einen von mehreren sicheren Betriebszuständen zu fahren.

12. Verwendung einer Vorrichtung (1) gemäß einem der Ansprüche 1 bis 10 in einer mobilen Arbeitsmaschine und/oder im Outdoor-Bereich unter freiem Himmel außerhalb einer geschützten Maschinenhalle.

13. Verwendung einer Vorrichtung (1) gemäß einem der Ansprüche 1 bis 10, wobei der Vorrichtung (1) einen Überwachungsbaustein (11) und/oder Schutzbaustein (14), insbesondere eine Speicherverwaltungseinheit (MMU) und/oder eine Speicherschutzeinheit (MPU) umfasst.

14. Verwendung einer Vorrichtung (1) gemäß einem der Ansprüche 1 bis 10, wobei der Vorrichtung (1) eine Systemüberwachung, insbesondere eine Überwachungskomponente (35) umfasst.

15. Computerprogramm welches dazu ausgebildet ist ein Verfahren nach Anspruch 11 auszuführen, wenn in einen Computer geladen.

16. Speichermedium mit einem darauf gespeicherten Computerprogramm welches dazu ausgebildet ist ein Verfahren nach Anspruch 11 auszuführen, wenn in einen Computer geladen.

17. Computersystem für eine sicherheitskritische Anwendung in einer Maschinenumgebung, welches zur Ablaufsteuerung von Anwendungsprogrammen auf Basis einer Laufzeitsystemstruktur ausgebildet ist, wobei das Computersystem umfasst:
- eine Empfangseinrichtung;
- eine Verarbeitungsumgebung, welche auf einer einzigen Hardwarekomponente (30) integriert ist und eine Vorrichtung (1) nach einem der Ansprüche 1 bis 10 aufweist; und
- eine Ausgabeeinrichtung.

## Claims

1. Apparatus (1) for an application which is critical to sequence or process safety in a freely programmable electronic controller of a machine environment, which has a computer and is designed to control the sequence of application programs (31, 32) on the basis of a runtime system (33, 34), having:
- a hardware component (30) in which the runtime system (33, 34) is integrated;
- a central computing unit (10) which has a microcontroller (101) with a monitoring module (11) and/or a protection module (14) and has a first memory area (12) and a second memory area (13); and
- memory means (20) which are connected to the central computing unit (10),
the runtime system (33, 34) being part of a runtime system structure (301) in the form of a computer program which has at least a dual design and is based on a first runtime system (33) and a second runtime system (34), the first runtime system (33) being in the form of a safe runtime system and the second runtime system (34) being in the form of a normal runtime system, a safe runtime system being able to be understood as meaning a runtime system in which a check is carried out by the runtime system itself, and a normal runtime system not having this ability, the runtime system structure (301) constituting a structure or environment for a runtime system (33, 34) in which it is possible to integrate an individual runtime system (33, 34) in the machine environment in such a manner that a normal application program (32) and a safe application program (31) can run on the computer of the machine environment,
in which case, in order to produce different priority levels, provision is made of an operating system or an operating system substitute in which timers of the central computing unit (10) are used to provide the different priority levels, and
the safe application program (31) and the normal application program (32) running alongside one another, and influence of the normal application program (32) on the safe application program (31) being excluded by virtue of a priority being granted to the safe runtime system (33) over the normal runtime system (34) by means of system monitoring.

2. Apparatus according to Claim 1, **characterized in that** the first runtime system (33) is provided for the sequence of a first application program (31) and the second runtime system (34) is provided for the sequence of a second application program (32), both application programs (31, 32) being integrated in the hardware component (30).

3. Apparatus according to Claim 1, **characterized in that** the first, safe application program (31) is designed to run in the second memory area (13) using the first memory area (12) as the main memory.

4. Apparatus according to Claim 1 or 3, **characterized in that** the memory means (20) have a data interchange means (21) and a memory area (22), and **in that** the second, normal application program (32) is designed to run in the memory area (22) using the data interchange means (21) as the main memory.

5. Apparatus according to one of the preceding Claims 1 to 4, **characterized in that** the memory means (20) have a data interchange means (21) which is in the form of a two-part data interchange means with a first part (21a) and a second part (21b), the first part (21a) being in the form of a shared memory, and the second runtime system (34) being connected to the first application program (31) or to the first runtime system (33) via the shared memory (21a).

6. Apparatus according to Claim 5, **characterized in that** the second runtime system (34) and the second application program (32) are connected to the second memory area (13).

7. Apparatus according to Claim 5, **characterized in that** the memory means (20) have a data interchange means (21) and a memory area (22), and **in that** the first runtime system (33) and the first application program (31) are connected to the memory area (22).

8. Apparatus (1) according to one of the preceding Claims 1 to 7, **characterized in that** the apparatus (1) is designed to carry out sequence control on the basis of six priority levels with increasing priority, a background loop (30a) being provided on a first level with the lowest priority and the second application program (32) being provided on a second level with a higher priority, and the first application program (31) being provided on a third and/or fourth level with a higher priority in each case.

9. Apparatus according to Claim 8, **characterized in that** a monitoring component (35) is provided on a level with the second highest priority, and an interrupter component (36) is provided on a level with the highest priority.

10. Apparatus according to Claim 1, **characterized in that** the first memory area (12) is a first memory module and the second memory area (13) is a second memory module.

11. Method for controlling the sequence of safety-critical application programs on the basis of a runtime system (33, 34) in a machine environment by means of an apparatus according to one of Claims 1 to 10, **characterized in that** the runtime system (33, 34) is integrated in a runtime system structure (301) which has at least a dual design and is based on a first runtime system (33) and a second runtime system (34), the first runtime system (33) being in the form of a safe runtime system and the second runtime system (34) being in the form of a normal runtime system, a safe runtime system being able to be understood as meaning a runtime system in which a check is carried out by the runtime system itself, and a normal runtime system not having this ability, having the steps of:
- executing tasks of a normal application program (32) running by means of the normal runtime system (34) on a first priority level;
- executing tasks of a safe application program (31) running by means of the safe runtime system (33) on a second priority level which has a higher priority than the first priority level, the safe runtime system (33) activating the normal runtime system (34); and
- monitoring the sequence of the safe runtime system (33) by means of a monitoring component (35) provided on a third priority level with a higher priority than the second priority level, the safe runtime system (33) being designed to run in one or one of a plurality of safe operating states.

12. Use of an apparatus (1) according to one of Claims 1 to 10 in a mobile work machine and/or outdoors in the open air outside a protected machine hall.

13. Use of an apparatus (1) according to one of Claims 1 to 10, the apparatus (1) comprising a monitoring module (11) and/or a protection module (14), in particular a memory management unit (MMU) and/or a memory protection unit (MPU).

14. Use of an apparatus (1) according to one of Claims 1 to 10, the apparatus (1) comprising system monitoring, in particular a monitoring component (35).

15. Computer program which is designed to carry out a method according to Claim 11 when loaded into a computer.

16. Storage medium having a computer program which is stored thereon and is designed to carry out a method according to Claim 11 when loaded into a computer.

17. Computer system for a safety-critical application in a machine environment, which is designed to control the sequence of application programs on the basis of a runtime system structure, the computer system comprising:
- a receiving device;
- a processing environment which is integrated on a single hardware component (30) and has an apparatus (1) according to one of Claims 1 to 10; and
- an output device.

## Revendications

1. Dispositif (1) pour une application déterminante pour la sécurité d'exécution ou de processus dans une commande électronique programmable librement d'un environnement de machine, lequel possède un ordinateur et est conçu pour la commande de l'exécution de programmes d'application (31, 32) sur la base d'un système à moteur d'exécution (33, 34), comprenant :
- un composant matériel (30) dans lequel est intégré le système à moteur d'exécution (33, 34) ;
- une unité de calcul centrale (10), laquelle possède un microcontrôleur (101) doté d'un composant de surveillance (11) et/ou d'un composant de protection (14) ainsi qu'une première zone de mémoire (12) et une deuxième zone de mémoire (13) ; et
- des moyens de mémorisation (20) qui sont en liaison avec l'unité de calcul centrale (10),
le système à moteur d'exécution (33, 34) faisant partie d'une structure de système à moteur d'exécution (301) sous la forme d'un programme informatique, lequel est au moins de configuration double et se base sur un premier (33) et un deuxième (34) système à moteur d'exécution,
le premier système à moteur d'exécution (33) étant réalisé sous la forme d'un système à moteur d'exécution sécurisé et le deuxième système à moteur d'exécution (34) sous la forme d'un système à moteur d'exécution normal,
le système à moteur d'exécution sécurisé désignant un système à moteur d'exécution avec lequel le contrôle est effectué par le système à moteur d'exécution lui-même, et un système à moteur d'exécution normal ne possédant pas cette aptitude,
la structure de système à moteur d'exécution (301) représentant une structure ou un environnement pour un système à moteur d'exécution (33, 34) avec lequel il est possible d'intégrer un système à moteur d'exécution (33, 34) unique dans l'environnement de machine de telle sorte qu'un programme d'application normal (32) ainsi qu'un programme d'application sécurisé (31) peuvent être exécutés sur l'ordinateur de l'environnement de machine,
un système d'exploitation ou un substitut de système d'exploitation étant prévu pour générer différents niveaux de priorité, avec lequel les temporisations de l'unité de calcul centrale (10) sont utilisées pour la mise à disposition de différents niveaux de priorité, et
le programme d'application normal (32) et le programme d'application sécurisé (31) s'exécutant l'un à côté de l'autre et une influence du programme d'application normal (32) sur le programme d'application sécurisé (31) étant exclue en ce qu'une priorité étant aménagée par un dispositif de surveillance du système au système à moteur d'exécution sécurisé (33) par rapport au système à moteur d'exécution normal (34).

2. Dispositif selon la revendication 1, **caractérisé en ce que** le premier système à moteur d'exécution (33) est prévu pour l'exécution d'un premier programme d'application (31) et le deuxième système à moteur d'exécution (34) pour l'exécution d'un deuxième programme d'application (32), les deux programmes d'application (31, 32) étant intégrés dans le composant matériel (30).

3. Dispositif selon la revendication 1, **caractérisé en ce que** le premier programme d'application (31), sécurisé, est conçu pour s'exécuter dans la deuxième zone de mémoire (13) en utilisant la première zone de mémoire (12) en tant que mémoire de travail.

4. Dispositif selon la revendication 1 ou 3, **caractérisé en ce que** les moyens de mémorisation (20) possèdent un moyen d'échange de données (21) et une zone de mémoire (22), et **en ce que** le deuxième programme d'application (32), normal, est conçu pour s'exécuter dans la zone de mémoire (22) en utilisant le moyen d'échange de données (21) en tant que mémoire de travail.

5. Dispositif selon l'une des revendications précédentes 1 à 4, **caractérisé en ce que** les moyens de mémorisation (20) possèdent un moyen d'échange de données (21), lequel est réalisé sous la forme d'un moyen d'échange de données en deux parties avec une première (21a) et une deuxième partie (21b), la première partie (21a) étant réalisée sous la forme d'une mémoire commune et le deuxième système à moteur d'exécution (34) étant en liaison avec le premier programme d'application (31) ou le premier système à moteur d'exécution (33) par le biais de la mémoire commune (21a).

6. Dispositif selon la revendication 5, **caractérisé en ce que** le deuxième système à moteur d'exécution (34) et le deuxième programme d'application (32) sont en liaison avec la deuxième zone de mémoire (13).

7. Dispositif selon la revendication 5, **caractérisé en ce que** les moyens de mémorisation (20) possèdent un moyen d'échange de données (21) et une zone de mémoire (22), et **en ce que** le premier système à moteur d'exécution (33) et le premier programme d'application (31) sont en liaison avec la zone de mémoire (22).

8. Dispositif (1) selon l'une des revendications précédentes 1 à 7, **caractérisé en ce que** le dispositif (1) est configuré pour effectuer une commande d'exécution en fonction de six niveaux de priorité ayant une priorité croissante, une boucle d'arrière-niveau (30a) étant prévue dans un premier niveau à la priorité la plus faible et le deuxième programme d'application (32) étant prévu dans un deuxième niveau ayant une priorité plus élevée, et le premier programme d'application (31) étant prévu dans un troisième et/ou un quatrième niveau ayant respectivement une priorité plus élevée.

9. Dispositif selon la revendication 8, **caractérisé en ce qu'**une composante de surveillance (35) est prévue dans un niveau ayant la deuxième priorité la plus élevée et une composante d'interruption (36) est prévue dans un niveau ayant la priorité la plus élevée.

10. Dispositif selon la revendication 1, **caractérisé en ce que** la première zone de mémoire (12) est un premier composant de mémoire et la deuxième zone de mémoire (13) un deuxième composant de mémoire.

11. Procédé de commande de l'exécution de programmes d'application déterminants pour la sécurité sur la base d'un système à moteur d'exécution (33, 34) dans un environnement de machine au moyen d'un dispositif selon l'une des revendications 1 à 10, **caractérisé en ce que** le système à moteur d'exécution (33, 34) est intégré dans une structure de système à moteur d'exécution (301), laquelle est au moins de configuration double et se base sur un premier (33) et un deuxième (34) système à moteur d'exécution, le premier système à moteur d'exécution (33) étant réalisé sous la forme d'un système à moteur d'exécution sécurisé et le deuxième système à moteur d'exécution (34) sous la forme d'un système à moteur d'exécution normal, le système à moteur d'exécution sécurisé désignant un système à moteur d'exécution avec lequel un contrôle est effectué par le système à moteur d'exécution lui-même, et un système à moteur d'exécution normal ne possédant pas cette aptitude, comprenant les étapes suivantes :
- traitement des tâches d'un programme d'application normal (32) exécuté au moyen du système à moteur d'exécution normal (34) dans un premier niveau de priorité ;
- traitement des tâches d'un programme d'application sécurisé (31) exécuté au moyen du système à moteur d'exécution sécurisé (33) dans un deuxième niveau de priorité, lequel possède une priorité plus élevée que le premier niveau de priorité, le système à moteur d'exécution sécurisé (33) activant le système à moteur d'exécution normal (34) ; et
- surveillance de l'exécution du système à moteur d'exécution sécurisé (33) par une composante de surveillance (35) prévue dans un troisième niveau de priorité, ayant une priorité supérieure au deuxième niveau de priorité, le système à moteur d'exécution sécurisé (33) étant conçu pour passer dans un ou dans un parmi plusieurs états de fonctionnement sécurisés.

12. Utilisation d'un dispositif (1) selon l'une des revendications 1 à 10 dans une machine de travail mobile et/ou à l'extérieur à l'air libre en-dehors d'un hall de machines protégé.

13. Utilisation d'un dispositif (1) selon l'une des revendications 1 à 10, le dispositif (1) comprenant un composant de surveillance (11) et/ou un composant de protection (14), notamment une unité de gestion de mémoire (MMU) et/ou une unité de protection de mémoire (MPU).

14. Utilisation d'un dispositif (1) selon l'une des revendications 1 à 10, le dispositif (1) comprenant un dispositif de surveillance du système, notamment une composante de surveillance (35).

15. Programme informatique qui est configuré pour mettre en oeuvre un procédé selon la revendication 11 lorsqu'il est chargé dans un ordinateur.

16. Support d'enregistrement sur lequel est enregistré un programme informatique qui est configuré pour mettre en oeuvre un procédé selon la revendication 11 lorsqu'il est chargé dans un ordinateur.

17. Système informatique pour une application déterminante pour la sécurité dans un environnement de machine, lequel est configuré pour commander l'exécution de programmes d'application sur la base d'une structure de système à moteur d'exécution, le système informatique comprenant :
- un dispositif de réception ;
- un environnement de traitement qui est intégré sur un composant matériel (30) unique et qui possède un dispositif (1) selon l'une des revendications 1 à 10 ; et
- un dispositif de sortie.
